# EUROPEAN PATENT SPECIFICATION

(11) **EP 1 349 035 B1**
(45) Date of publication and mention of the grant of the patent: **31.05.2006**
(21) Application number: 03006705.2
(22) Date of filing: 24.03.2003
(51) Int. Cl.: G06F 1/00

(54) **Self-restoration type program, program producing method and apparatus, information processing apparatus and program**
Selbst wiederherstellendes Programm, Programmerzeugungsmethode und Vorrichtung, Informationsbearbeitungsvorrichtung und Programm
Programme de restauration automatique, méthode et appareil de génération de programmes, appareil et programme de traitement d'information

(30) Priority: 25.03.2002 JP 2002082932
(43) Date of publication of application: 01.10.2003
(73) Proprietor: NEC CORPORATION, Tokyo (JP)
(72) Inventor: Uchida, Kaoru, Minato-ku, Tokyo (JP)
(74) Representative: Vossius & Partner

(56) References cited:
- WO-A-99/01815
- US-A- 5 892 899
- US-B1- 6 192 475
- US-B1- 6 334 189

## Description

The present invention relates to a technology for concealing processing contents of a program, and specifically, to a technology for concealing them by means of a structure like software.

Generally, in an information processing system which conducts processing by means of software, a developer generates a program (source code) using programming language, and translates this into an execution form (object) of machine language by means of compiling processing. A thing which is made through this process is called software a general user usually uses, and it is stored in an object storage section (a disc or a PROM, for example) on the information processing apparatus which is used by a general user, and during execution, this is read and put on a main memory (RAM), and is executed by a CPU, and thereby, desired processing is established.

Here, to avoid the analysis of the contents of the processing by a user or a malicious attacker, the actualization of concealment of (to make unreadable) the contents of a processing program is required. One reason why this is required is that infringement of an intellectual property right would occur. Because, generally, software is intellectual property including originality and a device of a developer, and if it is analyzed, it becomes possible to easily realize a similar operation and function, and for example, it can be used without payment of proper remuneration. Also, as another reason, the following might occur:

For example, it is assumed that a service function is prepared on a personal computer (PC), in which execution is permitted to only a formal user who made a reservation and paid remuneration or agreed to a charge. To this, if an execution form of a program for conducting identification processing of this formal user is analyzed, and it is understood by others how the processing is realized, by realizing and executing processing which provides a similar formal user identification result, others can unfairly utilize it or avoid a charge, and the user identification and charge function would be meaningless. Accordingly, the contents of the program as described above, which conducts the formal user identification processing, is required to be protected and concealed.

As one of methods for realizing the concealment of the contents of such a program, there is a method in which a general user cannot have access to an object by means of a structure like hardware. For example, a storage section and a processing section are covered by a cover which cannot be removed by a general user so that the object cannot be read out. Furthermore, measures can be taken, into which a special structure in which the object on the storage section is automatically deleted or damaged when such a cover is removed is incorporated.

As other method, there is a method of realizing the concealment of the contents of a program by software. One example of a conventional technology thereof is described in JP-P1998-161864A (Literature 1). In the technology described in this Literature 1, one part of byte codes obtained by compiling a source code is coded and stored in a disc of a user computer, and a decode key thereof is managed by a charge center. On the other hand, the user computer is equipped with a decoding section for decoding a coded part of the byte codes by means of the decode key acquired from the charge center, and an interpreter for interpreting and executing the decoded byte codes. The byte codes decoded in the decoding section are delivered to the interpreter directly or through a working region of a main memory, and interpreted and executed. Thereby, an opportunity in which the decoded byte data exist on a disc is eliminated, and the concealment of the contents of the program is realized.

US 6,334,189 relates to methods for protecting software applications from unauthorized distribution and use (piracy). One method involves using values generated by a conventional ESD (Electronic Security Device) to encrypt and/or decrypt user data (such as a file) that is generated and used by the application. In an embodiment, the user data is encrypted (such as during a write memory) using values returned by the ESD, and the user data is later decrypted.

As another literature in which a method of realizing the concealment of the contents of a program by software is described, there is JP-P1999-259574A (Literature 2). In this Literature 2, for software of an execution form such as contents of an image file or the like and game software, coding and decoding are conducted by means of a program which is incorporated into an OS (operating system) function extension area. In other words, by preparing a structure in which a special concealment mechanism is incorporated into a system management part as software, which is managed so that a general user cannot have access thereto easily on the OS, and an object operates only when it cooperate with a function thereof, analysis of a general user is made difficult.

In a method of concealing the contents of a program by means of a structure like hardware, since this is special one, there is a task or problems that the equipment thereof is expensive, and an additional cost occurs. Also, since the equipment depends on a hardware structure of the information processing apparatus, there is also a task that it does not have a wide-use in a case where actualization by means of a plurality of platforms is considered.

On the other hand, in a method of realizing it by software, since hardware is not needed, a charge is small from a cost point of view. However, in this kind of conventional method based on software, the task that it does not have a wide-use in a case where the actualization by means of a plurality of platforms is considered still remains. The reason thereof is that, in the method of Literature 1, the computer that is equipped with the decoding section for decoding the coded part of the byte codes is assumed. Also, in the method of Literature 2, since the program for decoding is incorporated into the OS function extension area, it depends on a type of the OS. Especially, since the detail of the OS is not known to the general public, and it is technically difficult for a general programmer to conduct the equipment for the protection of its own software, the method of Literature 2 might introduce cost-up that a development load of the realization of a protection mechanism is increased in a case where the protection of certain software is realized intentionally.

In the light of such circumstances, the present invention was proposed, and the objective thereof is to realize the concealment of the contents of a program by software at a low cost and in a form independent of a platform. The object of the invention is achieved with the features of the claims.

A first self-restoration type program comprising an inversion processing that is incorporated into a main program, wherein a part of said main program is obfuscated by reversible conversion processing, and said inversion processing inverts said obfuscated part read onto a main memory into original contents on said main memory before said obfuscated part is executed in an information processing apparatus.

A second self-restoration type program of the present invention has a structure wherein entirety or one part of said main program is converted into a difficult state to be deciphered, and said inversion processing operates first during starting of the program.

A third self-restoration type program of the present invention has a structure wherein an initialization section of a constant data, which is included in said main program, is replaced with an initialization section of an alternative constant data in a difficult state to be deciphered, and said inversion processing operates before said constant data is referred to and an original constant data is restored from said alternative constant data.

A fourth self-restoration type program of the present invention has a structure wherein an initialization section of a constant data, which is included in said main program, is replaced with an initialization section of an alternative constant data in a difficult state to be deciphered, and before said constant data is referred to, initialization setting processing of said alternative constant data, restoration processing of an original constant data by means of said inversion processing to the alternative constant data, to which said initialization setting processing was applied, and erasing processing of the alternative constant data, to which said initialization setting processing was applied, from the main memory operate, and after said restored constant data is referred to, processing for erasing said restored constant data from the main memory operates.

In a first program producing method of the present invention, at least one part of a main program that is a subject to be protected is converted into a difficult state to be deciphered by means of reversible conversion processing, and inversion processing that operates before at least a converted part is executed during execution in an information processing apparatus so that contents of the converted part read onto a main memory are inverted into original contents on the main memory is incorporated into said main program, and thereby, it produces a self-restoration type program.

In a second program producing method of the present invention, said conversion processing is incorporated so that entirety or one part of said main program is converted into a difficult state to be deciphered, and said inversion processing operates first during starting of said main program. More particularly, it includes: a first step of compiling a source code of a main program to produce an object; a second step of converting said object into an object in a difficult state to be deciphered by means of reversible conversion processing; and a third step of, prior to execution of said object in a difficult state to be deciphered, synthesizing an inversion object for applying inversion processing to said object on a main memory to restore it to an original state on the main memory, and the object of said main program. Also, it includes: a first step of compiling a source code of a main program to produce an object; a second step of applying conversion processing to one part of said object to produce an object in a state where one part is difficult to be deciphered; and a third step of, prior to execution of said one part in a difficult state to be deciphered, synthesizing an inversion object for applying inversion processing to said one part on a main memory to restore it to an original state on the main memory, and the object of said main program. Also, in a preferable embodiment, in said second step, a part put between a start mark and an end mark which are inserted by a user into the source code of the main program is a subject to which conversion processing is applied.

In a third program producing method of the present invention, said conversion processing is incorporated so that an initialization section of a constant data, which is included in said main program, is replaced with an initialization section of an alternative constant data in a difficult state to be deciphered, and said conversion processing operates before said constant data is referred to. More particularly, it includes: a first step of replacing an initialization section of a constant data, which is included in a source code of a main program, with an initialization section of an alternative constant data converted into a difficult state to be deciphered by means of reversible conversion processing, and producing a source code into which is inserted a source of inversion processing for restoring an original constant data from said alternative constant data, before said constant data is referred to; and a second step of compiling said produced source code to produce an object. Also, in a preferable embodiment, in said first step, a constant data put between a start mark and an end mark which are inserted by a user into the source code of the main program is a subject to which conversion processing is applied, and the source of said inversion processing is inserted into a place of an inversion insert position mark which is inserted by a user into the source code of the main program.

In a fourth program producing method of the present invention, an initialization section of a constant data, which is included in said main program, is replaced with an initialization section of an alternative constant data in a difficult state to be deciphered, and said initialization setting processing, said inversion processing and said erasing processing are incorporated so that, before said constant data is referred to, the initialization setting processing of said alternative constant data, the restoration processing of an original constant data by means of said inversion processing to the alternative constant data, to which said initialization setting processing was applied, and the erasing processing of the alternative constant data, to which said initialization setting processing was applied, from the main memory operate, and said erasing processing is incorporated so that, after said restored constant data is referred to, the erasing processing for erasing said restored constant data from the main memory operates. More particularly, it includes: a first step of replacing an initialization section of a constant data, which is included in a source code of a main program, with an initialization section of an alternative constant data converted into a difficult state to be deciphered by means of reversible conversion processing, and producing a source code into which a first source for, before said constant data is referred to, conducting initialization setting processing of said alternative constant data, restoration processing of an original constant data by means of said inversion processing to the alternative constant data, to which said initialization setting processing was applied, and erasing processing of the alternative constant data, to which said initialization setting processing was applied, from a main memory is incorporated, and into which a second source for, after said restored constant data is referred to, conducting erasing processing for erasing said restored constant data from the main memory is incorporated; and a second step of compiling said produced source code to produce an object. In a preferable embodiment, in said first step, a constant data put between a start mark and an end mark which are inserted by a user into the source code of the main program is a subject to which conversion processing is applied, and said first source is inserted into a place of a subject utilization start position mark which is inserted by a user into the source code of the main program, and said second source is inserted into a place of a subject utilization end position mark which is inserted by a user into the source code of the main program.

A first program producing apparatus of the present invention comprises: means for converting at least one part of a main program that is a subject to be protected into a difficult state to be deciphered by means of reversible conversion processing; and means for incorporating into said main program inversion processing that operates before at least a converted part is executed during execution of an information processing apparatus so that contents of the converted part read onto a main memory are inverted into original contents on the main memory.

A second program producing apparatus of the present invention comprises: means for converting entirety or one part of said main program into a difficult state to be deciphered, and means for incorporating said conversion processing so that said inversion processing operates first during starting of said main program. More particularly, it comprises: first means for compiling a source code of a main program to produce an object; second means for converting said object into an object in a difficult state to be deciphered by means of reversible conversion processing; and third means for, prior to execution of said object in a difficult state to be deciphered, synthesizing an inversion object for applying inversion processing to said object on a main memory to restore it to an original state on the main memory, and the object of said main program. Also, it comprises: first means for compiling a source code of a main program to produce an object; second means for applying conversion processing to one part of said object to produce an object in a state where one part is difficult to be deciphered; and third means for, prior to execution of said one part in a difficult state to be deciphered, synthesizing an inversion object for applying inversion processing to said one part on a main memory to restore it to an original state on the main memory, and the object of said main program. In a preferable embodiment, in said second means, a part put between a start mark and an end mark which are inserted by a user into the source code of the main program is a subject to which conversion processing is applied.

A third program producing apparatus of the present invention comprises: means for replacing an initialization section of a constant data, which is included in said main program, with an initialization section of an alternative constant data in a difficult state to be deciphered; and means for incorporating said conversion processing so that said conversion processing operates before said constant data is referred to. More particularly, it includes: first means for replacing an initialization section of a constant data, which is included in a source code of a main program, with an initialization section of an alternative constant data converted into a difficult state to be deciphered by means of reversible conversion processing, and producing a source code into which is inserted a source of inversion processing for restoring an original constant data from said alternative contast data, before said constant data is referred to; and second means for compiling said produced source code to produce an object. In a preferable embodiment, in said first means, a constant data put between a start mark and an end mark which are inserted by a user into the source code of the main program is a subject to which conversion processing is applied, and the source of said inversion processing is inserted into a place of an inversion insert position mark which is inserted by a user into the source code of the main program.

A fourth program producing apparatus of the present invention comprises: means for replacing an initialization section of a constant data, which is included in said main program, with an initialization section of an alternative constant data in a difficult state to be deciphered; means for incorporating said initialization setting processing, said inversion processing and said erasing processing so that, before said constant data is referred to, the initialization setting processing of said alternative constant data, restoration processing of an original constant data by means of said inversion processing to the alternative constant data, to which said initialization setting processing was applied, and the erasing processing of the alternative constant data, to which said initialization setting processing was applied, from the main memory operate; and means for incorporating said erasing processing so that, after said restored constant data is referred to, the erasing processing for erasing said restored constant data from the main memory operates. More particularly, it comprises: first means for replacing an initialization section of a constant data, which is included in a source code of a main program, with an initialization section of an alternative constant data converted into a difficult state to be deciphered by means of reversible conversion processing, and producing a source code into which a first source for, before said constant data is referred to, conducting initialization setting processing of said alternative constant data, restoration processing of an original constant data by means of said inversion processing to the alternative constant data, to which said initialization setting processing was applied, and erasing processing of the alternative constant data, to which said initialization setting processing was applied, from a main memory is incorporated, and into which a second source for, after said restored constant data is referred to, conducting erasing processing for erasing said restored constant data from the main memory is incorporated; and second means for compiling said produced source code to produce an object. In a preferable embodiment, in said first means, a constant data put between a start mark and an end mark which are inserted by a user into the source code of the main program is a subject to which conversion processing is applied, and said first source is inserted into a place of a subject utilization start position mark which is inserted by a user into the source code of the main program, and said second source is inserted into a place of a subject utilization end position mark which is inserted by a user into the source code of the main program.

A first information processing apparatus of the present invention comprises: an object storage section for storing a self-restoration type program wherein inversion processing that operates before at least a converted part is executed during execution in the information processing apparatus so that contents of the converted part read onto a main memory are inverted into original contents on the main memory is incorporated into a main program in which, by means of reversible conversion processing, at least one part is converted into a difficult state to be deciphered; a main memory in which said self-restoration type program is loaded; and a CPU for executing said self-restoration type program loaded in said main memory.

A second information processing apparatus of the present invention, in said self-restoration type program, entirety or one part of said main program is converted into a difficult state to be deciphered, and said inversion processing operates first during starting of the program.

A third information processing apparatus of the present invention, in said self-restoration type program, an initialization section of a constant data, which is included in said main program, is replaced with an initialization section of an alternative constant data in a difficult state to be deciphered, and said inversion processing operates before said constant data is referred to and an original constant data is restored from said alternative constant data.

A fourth information processing apparatus of the present invention, in said self-restoration type program, an initialization section of a constant data, which is included in said main program, is replaced with an initialization section of an alternative constant data in a difficult state to be deciphered, and before said constant data is referred to, initialization setting processing of said alternative constant data, restoration processing of an original constant data by means of said inversion processing to the alternative constant data, to which said initialization setting processing was applied, and erasing processing of the alternative constant data, to which said initialization setting processing was applied, from the main memory operate, and after said restored constant data is referred to, processing for erasing said restored constant data from the main memory operates.

In the present invention, since the concealment of the contents of a program is realized by software, a cost necessary for the concealment of the contents of the program is reduced, and since the processing in the self-restoration type program is within a range of a usual operation of a user program, it is possible to conceal the contents of the program in a form independent of a platform.

This and other objects, features, and advantages of the present invention will become more apparent upon a reading of the following detailed description and drawings, in which:
Fig. 1 is an arrangement view of an embodiment of the present invention;
Fig. 2 is a block diagram of an information processing system in relation to a first embodiment of the present invention;
Fig. 3 is a flowchart showing a flow of processing on a software development side in the first embodiment of the present invention;
Fig. 4 is a flowchart showing a flow of processing on a software utilization side in the first embodiment of the present invention;
Fig. 5 is a block diagram of an information processing system in relation to a second embodiment of the present invention;
Fig. 6 is a flowchart showing a flow of processing on a software development side in the second embodiment of the present invention;
Fig. 7 is a flowchart showing a flow of processing on a software utilization side in the second embodiment of the present invention;
Fig. 8 is a block diagram of an information processing system in relation to a third embodiment of the present invention;
Fig. 9 is a flowchart showing a flow of processing on a software development side in the third embodiment of the present invention;
Fig. 10 is a flowchart showing a flow of processing on a software utilization side in the third embodiment of the present invention;
Fig. 11 is a block diagram of an information processing system in relation to a fourth embodiment of the present invention;
Fig. 12 is a view showing one example of a source code in the fourth embodiment of the present invention;
Fig. 13 is a view showing one example of a marked source code in the fourth embodiment of the present invention;
Fig. 14 is a view showing one example of a command for starting-up a source program conversion tool in the fourth embodiment of the present invention;
Fig. 15 is a view showing one example of a source code output from the source program conversion tool in the fourth embodiment of the present invention;
Fig. 16 is a flowchart showing a flow of processing of the source program conversion tool in the fourth embodiment of the present invention;
Fig. 17 is a block diagram of an information processing system in relation to a fifth embodiment of the present invention;
Fig. 18 is a view showing one example of a marked source code in the fifth embodiment of the present invention;
Fig. 19 is a view showing one example of a source code output from the source program conversion tool in the fifth embodiment of the present invention;
Fig. 20 is a flowchart showing a flow of processing of the source program conversion tool in the fifth embodiment of the present invention; and
Fig. 21 is a flowchart showing a flow of processing on a software utilization side in the fifth embodiment of the present invention.

Below, a form of working of the present invention will be explained in detail referring to drawings.

Also, the obfuscate means the converting into difficult state to be deciphered.

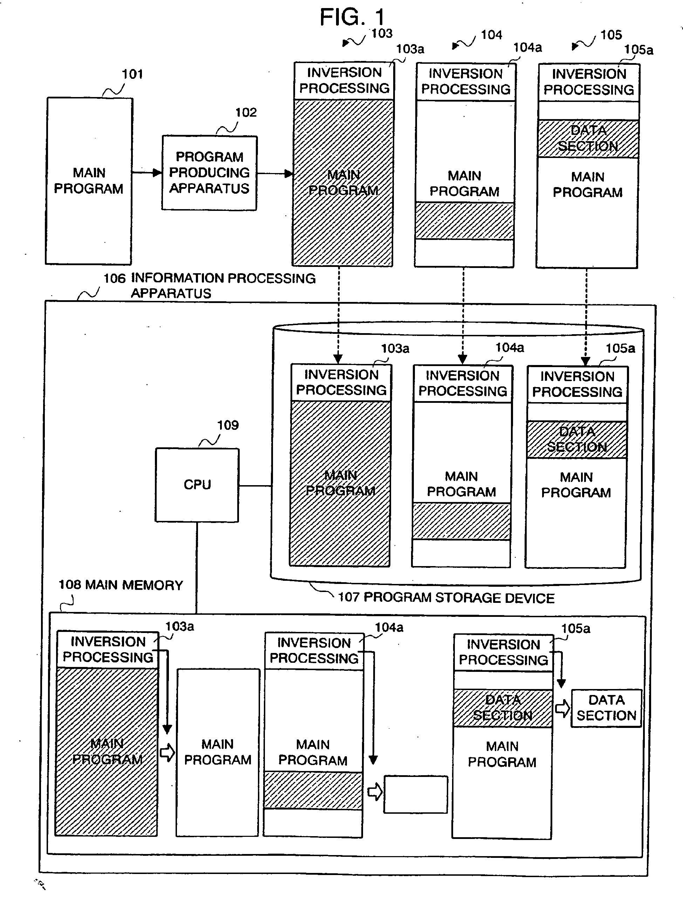

Referring to Fig. 1, in the form of working of the present invention, in order to conceal the contents of processing of a main program 101 designed so as to carry our a desired function, by means of a program producing apparatus 102, a program in which, by mean of reversible conversion processing, at least one part of the main program 101 is converted into a difficult state to be deciphered is produced. At this time, in the produced program, inversion processing for inverting the contents of the above-described converted part into original contents before at least the above-described part is executed is incorporated. The program produced in such a manner is called a self-restoration type program in this specification, since it has a function for, during its execution, restoring a converted part within its program to original contents by means of inversion processing which the program itself has.

As an example of the above-described conversion processing and inversion processing, conversion by means of a coding technology and inversion by means of a decoding technology can be considered. At this time, a decoding key that is used for decoding can be statically included within the conversion processing or can be provided from an outside during execution. In addition, the conversion and inversion are not limited to coding and decoding, and other techniques can be used.

Referring to Fig. 1, three kinds of self-restoration type programs 103, 104 and 105 are shown. Here, netted parts show converted parts that are converted into a difficult state to be deciphered.

With regard to the first self-restoration type program 103, the entirety of the main program 101 is converted into a difficult state to be deciphered, and it operates first during start-up of this self-restoration type program 103, and inversion processing 103a for inverting the entirety of the main program into original contents is incorporated thereinto. Since, generally, a code section and a data section exist in a program, in a case of this self-restoration type program 103, both of the code section and the data section are obfuscated.

With regard to the second self-restoration type program 104, only one part of the main program 101 is converted into a difficult state to be deciphered, and it operates first during start-up of this self-restoration type program 104, and inversion processing 104a for inverting the converted part in the main program into original contents is incorporated thereinto. Whether the converted part is a code section or a data section is optional.

With regard to the third self-restoration type program 105, a constant data included in the main program is converted into other constant data obfuscated, and it operates before at least the above-described constant data is referred to by a code section in the main program during execution of this self-restoration type program 105, and inversion processing 105a for inverting the above-described other constant data into an original constant data is incorporated thereinto. Here, the constant data is a data including more or equal to one constant, and is typically constant progression consisting of a plurality of constants.

As mentioned above, in the information processing apparatus for conducting processing by mean of software, a developer produces a source code using programming language, and translates it into an object that is an execution form of mechanical language by means of compiling processing and provides it for utilization. With regard to the incorporation of the above-described conversion processing and inversion processing into the main program 101 in the program producing apparatus 102, in case that a subject to be concealed is a data section only, the incorporation of both thereof can be conducted to the main program of a source level or can be conducted to the main program of an object form. Also, it is possible to conduct the incorporation at respective different levels such that the conversion processing is conducted at a source level and the incorporation of the inversion processing is conducted at an object level. Also, in case that a subject to be concealed includes a code section, since compiling cannot be conducted if the conversion processing is conducted at a source level, it is conducted at an object level.

The self-restoration type programs 103, 104 and 105 produced in the above manner are stored in a disc in an information processing apparatus 106 of a user or in a non-volatile program storage device 107 such as a PROM. In Fig. 1, although the three kinds of the self-restoration type programs 103, 104 and 105 produced from the same main program 101 are stored, this is for convenience for explaining processing during execution of each program, and usually, any one thereof is stored.

The information processing apparatus 106 is provided with a CPU 109 for executing the self-restoration type programs 103, 104 and 105 on a main memory 108, which are stored in the program storage device 107. The information processing apparatus 106 is equipped with an OS although it is not shown in the figure, and also, can be provided with various kinds of peripheral devices such as a keyboard, a display device and a communication device, and various kinds of programs such as a communication program in accordance with an execution environment of a user.

Under the control by the OS that operates by means of the CPU 109, the self-restoration type programs 103, 104 and 105 stored in the program storage device 107 are started-up similarly to a usual application program, and are executed on the main memory 108. On the main memory 108 of Fig. 1, an aspect of the inversion processing in the three kinds of the self-restoration type programs 103, 104 and 105 is shown.

In a case of the self-restoration type program 103, prior to the execution of the main program, the inversion processing 103a is executed, and after the entirety of the obfuscated main program is inverted into original contents on the main memory 108, the main program is executed.

In a case of the self-restoration type program 104, prior to the execution of the main program, the inversion processing 104a is executed, and after the converted part in the main program, which is obfuscated, is inverted into original contents on the main memory 108, the main program is executed.

In a case of the self-restoration type program 105, before a constant data replaced with other constant data in the main program, which is obfuscated, is referred to by a code in the main program, the inversion processing 105a is executed, and original constant data is restored on the main memory 108 from the other constant data, and the restored constant data is referred to.

In this manner, in the form of this working, independent of a structure like hardware, and also, independent of the OS of the information processing apparatus, it is possible to conceal the contents of a program.

Next, embodiments of the present invention will be explained in detail referring to the drawings.

### [FIRST EMBODIMENT]

In this embodiment, a self-restoration type program in which the entirety of a program that is a subject to be protected is obfuscated is produced, and during its execution, it is restored to original contents and executed.

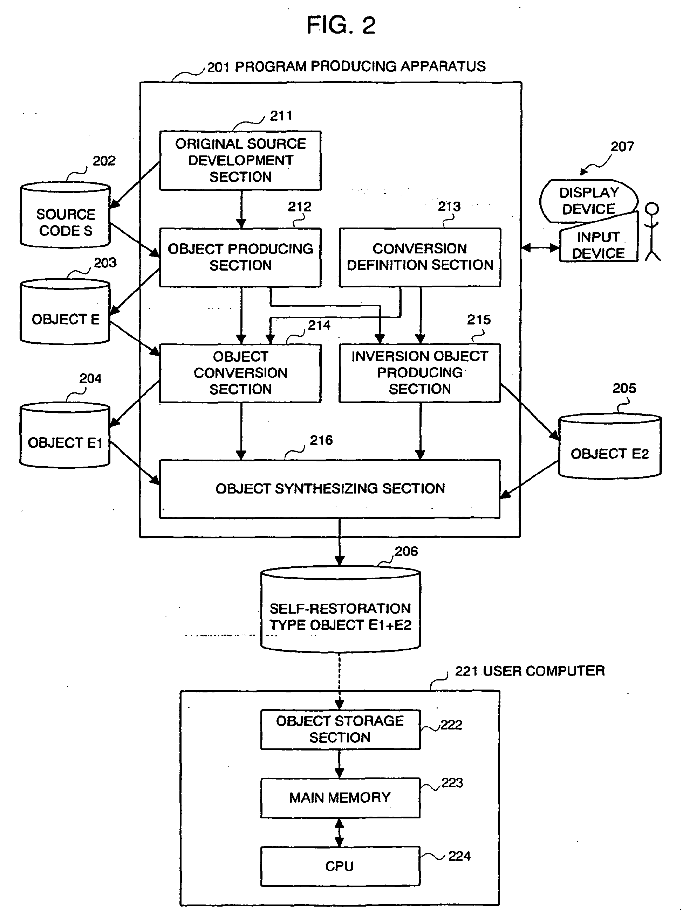

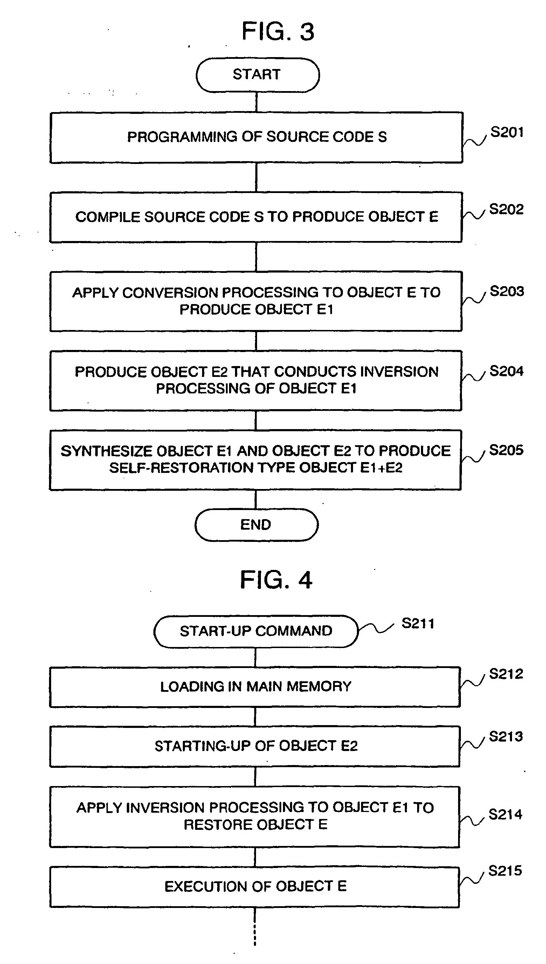

One example of an information processing apparatus, to which this embodiment is applied, is shown in Fig. 2. In Fig. 2, an upper half shows a structure on a software development side, and a lower half shows a structure on a software utilization side. Also, Fig. 3 shows a flow of processing on the software development side, and Fig. 4 shows a flow of processing on the software utilization side.

Referring to Fig. 2, on the software development side, a program producing apparatus 201, and storage sections 202 - 206 such as a magnetic disc device and an input and output device 207 that are connected thereto are provided. The input and output device 207 includes an input device such as a keyboard or the like, from which a developer of software inputs a data and a command to the program producing apparatus 201, and a display device for outputting to the developer a data or the like output from the program producing apparatus 201. Also, the program producing apparatus 201 is provided with an original source development section 211, an object producing section 212, a conversion definition section 213, an object conversion section 214, an inversion object producing section 215, and an object synthesizing section 216. Such a program producing apparatus 201 can be realized by a computer such as a workstation and a personal computer, and a program for producing a program. The program for producing a program is recorded in a computer readable record medium such as a magnetic disc and a semiconductor memory which are not shown in the figure, and is read by the computer during start-up or the like of the computer, and by controlling the operation of the computer, each function section constituting the program producing apparatus 201 is produced on the computer.

On the other hand, on the software user side, a user computer 221 having an object storage device 222 such as a magnetic disc and a PROM, which stores the self-restoration type program, a main memory 223 and a CPU 224 is provided. The user computer 221 is a usual personal computer, a mobile information terminal or the like.

Next, referring to Fig. 2 and Fig. 3, an operation on the software development side will be explained. A developer starts-up the original source development section 211 in the program producing apparatus 201 from the input and output device 207, and by using a text editor function included in this original source development section 211, develops a source code S of software, which defines an original desired operation, using high-class language or the like, and stores it in the storage section 202 (Step S201).

After storing the source code S in the storage section 202, the original source development section 211 starts-up the object producing section 212. The object producing section 212 produces an object (execution form) E from the source code S by means of compiling processing using a compiler, and stores it in the storage section 203 (Step S202).

Next, the object conversion section 214 and the inversion object producing section 215 are started-up from the object producing section 212. The object conversion section 214 applies reversible conversion processing to the object E, and stores a resultant object E1 in the storage section 204 (Step S203). On the other hand, the inversion object producing section 215 produces an object E2 of a program for executing inversion processing g(E1) to the object E1, and stores it in the storage section 205.

The above-described reversible conversion processing is f( ) in which, to a result E1=f(E) of applying conversion processing f( ) to a certain object E, inversion processing g( ) where g(E1)=E is established exists. Here, with regard to the conversion processing f( ), a size of an input data is the same as a size of an output data. As an example, a simple method can be used, such as reverse processing for every bit, exclusive-or calculation between adjacent bytes, and one-to-one conversion for every byte using a predefined replacement letter table. Furthermore, since a purpose of this processing is to make the decipherment of the original object E impossible, it is more realistic to use a pair of more complicated coding processing and decoding processing in which the supposition and analysis of the contents of conversion are difficult as a pair of the conversion processing and the inversion processing. As an example of coding algorithm, for example, a DES or the like is known, and based on a certain secret key, calculation is conducted by mean of a predetermined calculation method to obtain E1=f(E) from E, and also, to E1, by conducting decoding calculation based on the same secret key, E=g(E1) can be obtained.

In a case of the program producing apparatus 201 of Fig. 2, a pair of the conversion processing f( ) and the inversion processing g( ) having a characteristic as described above are determined by the conversion definition section 213. This is generally conducted by somewhat fixed calculation algorithm and by determining processing parameters that are input thereto and finally have an effect on an operation result. These parameters are values generally called a "code key", and different numerals can be produced at random for every execution or a developer can intentionally input them from input means such as a key board or the like. The object conversion section 214 conducts the conversion of the object based on the object E stored in the storage section 203, and f( ) provided from the conversion definition section 213, and obtains the object E1=f(E). Also, the inversion object producing section 215 produces an object E2 of a program for executing inversion processing g(E1) to the object E1 based on g( ) provided by the conversion definition section 213 (Step S204).

After the processing of the object conversion section 214 and the inversion object producing section 215 is completed, the object synthesizing section 216 synthesizes the object E1 stored in the storage section 204 and the object E2 stored in the storage section 205 to produce a self-restoration type object E1+E2, and stores it in the storage section 206 (Step S205). Here, the object synthesizing section 216 is incorporated so that the object E2 is executed first during start-up of the self-restoration type object E1+E2, for example, so that a start code (a code that is executed first in the object E2) of the object E2 becomes an execution start point of the self-restoration type object E1+E2. Also, for example, a start code (a code that is executed first in the object E1) of the object E1 is arranged just after an end code (a code that is executed lastly in the object E2) of the object E2 or a jump command or the like for transferring control to the start code of the object E1 is arranged just after the end code of the object E2, so that the object E1 is executed just after the execution of the object E2 is completed.

The self-restoration type object E1+E2 developed in such a manner is delivered to a user side, and is stored in the object storage section 222 of the user computer 221. It is not necessarily limited to a form in which the object is directly stored in the object storage section 222, and there is also a form in which it is stored in a CD-ROM or a flexible disc and is distributed to a user or in which it is distributed to a user by means of a method of a file transfer or the like via a network, and a user stores it in the object storage section 222 such as a hard disc.

Next, referring to Fig. 2 and Fig. 4, an operation when the self-restoration type object E1+E2 stored in the object storage section 222 of the user computer 221 is executed will be explained.

When a start-up command to the self-restoration type object E1+E2 is generated in the user computer 221 (Step S211), by means of an OS of the said user computer 221, like a general application program, the self-restoration type object E1+E2 is loaded in the main memory 223 from the object storage section 222 (Step S212), and control is transferred to its execution start point. Thereby, the object E2 is started-up first (Step S213). By applying inversion processing g(E1) to the object E1 on the main memory 223, the object E2 restores the object E1 to the object E on the main memory 223 (Step S214). And, the object E2 transfers control to the object E after completing its own processing. Thereby, the object E starts execution (Step S215). This is equivalent to an operation that the object E obtained from the original source code S is started-up, and is executed. In other words, thereby, as an initial intention, processing defined by the source code S is carried out. The above processing is within a range of a usual operation in a user program, and there is almost no part depending upon the OS.

In this manner, according to this embodiment, it is possible to conceal the entirety of the developed program, including a code section and a data section in the program, independent of a structure of hardware and independent of the OS of the information processing apparatus.

### [SECOND EMBODIMENT]

In this embodiment, a self-restoration type object in which only one part of a program that is a subject to be protected is obfuscated is produced, and during its execution, is restored to original contents and is executed. As an example, there is a code section (a part that defines a processing procedure) in which algorithm is unknown or a constant data for defining unknown execution parameters belonging to know-how, which are necessary for realizing better capacity.

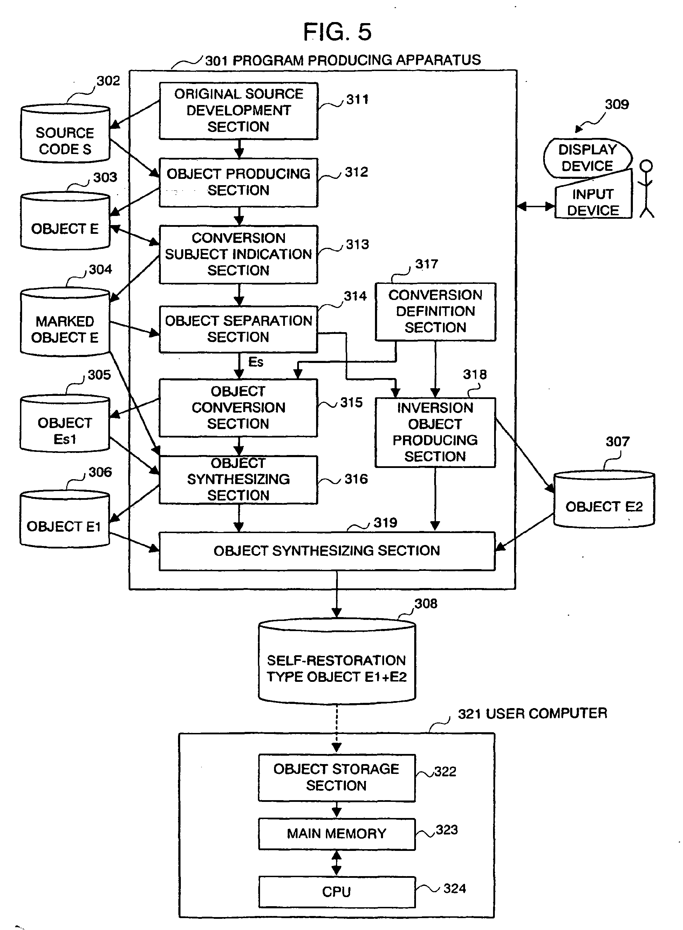

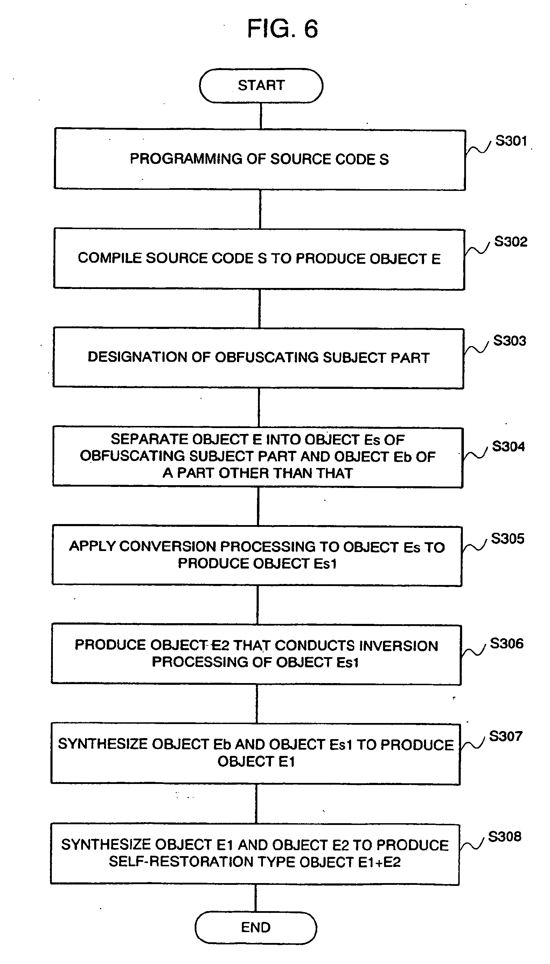

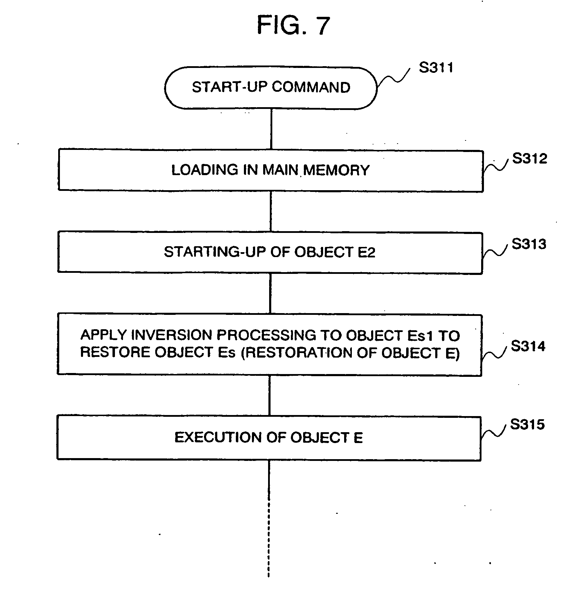

One example of an information processing apparatus, to which this embodiment is applied, is shown in Fig. 5. In Fig. 5, an upper half shows a structure on a software development side, and a lower half shows a structure on a software utilization side. Also, Fig. 6 shows a flow of processing on the software development side, and Fig. 7 shows a flow of processing on the software utilization side.

Referring to Fig. 5, on the software development side, a program producing apparatus 301, and storage sections 302 - 308 such as a magnetic disc device and an input and output device 309 that are connected thereto are provided. The input and output device 309 includes an input device such as a keyboard or the like, from which a developer of software inputs a data and a command to the program producing apparatus 301, and a display device for outputting to the developer a data or the like output from the program producing apparatus 301. Also, the program producing apparatus 301 is provided with an original source development section 311, an object producing section 312, a conversion subject indication section 313, an object separation section 314, an object conversion section 315, an object synthesizing section 316, a conversion definition section 317, an inversion object producing section 318 and an object synthesizing section 319. Such a program producing apparatus 301 can be realized by a computer such as a workstation and a personal computer, and a program for producing a program. The program for producing a program is recorded in a computer readable record medium such as a magnetic disc and a semiconductor memory which are not shown in the figure, and is read by the computer during start-up or the like of the computer, and by controlling the operation of the computer, each function section constituting the program producing apparatus 301 is produced on the computer.

On the other hand, on the software user side, a user computer 321 having an object storage device 322 such as a magnetic disc and a PROM, which stores the self-restoration type program, a main memory 323 and a CPU 324 is provided. The user computer 321 is a usual personal computer, a mobile information terminal or the like.

Next, referring to Fig. 5 and Fig. 6, an operation on the software development side will be explained. A developer starts-up the original source development section 311 in the program producing apparatus 301 from the input and output device 309, and by using a text editor function included in this original source development section 311, develops a source code S of software, which defines an original desired operation, using high-class language or the like, and stores it in the storage section 302 (Step S301).

After storing the source code S in the storage section 302, the original source development section 311 starts-up the object producing section 312. The object producing section 312 produces an object (execution form) E from the source code S by means of compiling processing using a compiler, and stores it in the storage section 303 (Step S302).

Next, the developer starts-up the conversion subject indication section 313, and displays the contents of the object E on the display device, and produces the object E wherein a mark is applied to a part thereof, which should be a subject to be concealed, so that the concealment subject part can be discriminated by means of object separating disposition for later concealment, and stores it in the storage section 304 (Step S303). The mark can be optional if it could be discriminative, and a start mark is inserted just before the concealment subject part and an end mark is inserted just after that.

Next, the developer starts-up the object separation section 314. The object separation section 314 separates the object E into an object Es of the concealment subject part and an object Eb of a part other than that (Step S304). Particularly, it reads the marked object E from a head in order, and extracts a part from a position where the start mark is inserted to a position just after that, where the end mark is inserted, as the object Es of one concealment subject part, and delivers this extracted object Es to the object conversion section 315. Also, it notifies the inversion object producing section 318 of the information on bytes from which byte to which byte of the object E belong to the object Es. The object conversion section 315 applies reversible conversion processing to the object Es, and stores a resultant object Es1 in the storage section 305 (Step S305). On the other hand, the inversion object producing section 318 produces an object E2 of a program for executing inversion processing g(Es1) to the object Es1 that exists at the notified part of the object E, and stores it in the storage section 307 (Step S306).

The above-described reversible conversion processing is f( ) in which, to the object Es1=f(Es) that is a result of applying conversion processing f( ) to a certain object Es, inversion processing g( ) where g(Es1)=Es is established exists. Here, with regard to the conversion processing f( ), a size of an input data is the same as a size of an output data. As an example, as raised in the first embodiment, a simple method can be used, such as reverse processing for every bit, exclusive-or calculation between adjacent bytes, and one-to-one conversion for every byte using a predefined replacement letter table. Also, like a case of the first embodiment, since a purpose of this processing is to make the decipherment of the original object Es impossible, it is more realistic to use a pair of more complicated coding processing and decoding processing in which the supposition and analysis of the contents of conversion are difficult as a pair of the conversion processing and the inversion processing. As an example of coding algorithm, for example, a DES or the like is known, and based on a certain secret key, calculation is conducted by mean of a predetermined calculation method to obtain Es1=f(Es) from Es, and also, to Es1, by conducting decoding calculation based on the same secret key, Es=g(Es1) can be obtained.

In a case of the program producing apparatus 301 of Fig. 5, a pair of the conversion processing f( ) and the inversion processing g( ) having a characteristic as described above are determined by the conversion definition section 317. This is generally conducted by somewhat fixed calculation algorithm and by determining processing parameters that are input thereto and finally have an effect on an operation result. These parameters are values generally called a "code key", and different numerals can be produced at random for every execution or a developer can intentionally input them from input means such as a key board or the like. The object conversion section 315 conducts the conversion of the object based on the object Es extracted by the object separation section 314, and f( ) provided from the conversion definition section 317, and obtains the object Es1=f(Es). Also, the inversion object producing section 318 produces an object E2 of a program for executing inversion processing g(Es1) to the object Es1 based on g( ) provided by the conversion definition section 317.

After the processing of the object conversion section 315 is completed, the object synthesizing section 316 is started-up. The object synthesizing section 316 produces an object E1 in which one part of the object E is concealed, by replacing the object Es in the object E stored in the storage section 304 with the object Es1 stored in the storage section 305 (Step S307).

After the processing of the object synthesizing section 316 and the inversion object producing section 318 is completed, the object synthesizing section 319 operates and synthesizes the object E1 stored in the storage section 306 and the object E2 stored in the storage section 307 to produce a self-restoration type object E1+E2, and stores it in the storage section 308 (Step S308). Here, the object synthesizing section 319 is incorporated so that the object E2 is executed first during start-up of the self-restoration type object E1+E2, for example, so that a start code (a code that is executed first in the object E2) of the object E2 becomes an execution start point of the self-restoration type object E1+E2. Also, for example, a start code (a code that is executed first in the object E1) of the object E1 is arranged just after an end code (a code that is executed lastly in the object E2) of the object E2 or a jump command or the like for transferring control to the start code of the object E1 is arranged just after the end code of the object E2, so that the object E1 is executed just after the execution of the object E2 is completed.

The self-restoration type object E1+E2 developed in such a manner is, in a manner same as a form of the first working, stored in the object storage section 322 of the user computer 321.

Next, referring to Fig. 5 and Fig. 7, an operation when the self-restoration type object E1+E2 stored in the object storage section 322 of the user computer 321 is executed will be explained.

When a start-up command to the self-restoration type object E1+E2 is generated in the user computer 321 (Step S311), by means of an OS of the said user computer, like a general application program, the self-restoration type object E1+E2 is loaded in the main memory 323 from the object storage section 322 (Step S312), and control is transferred to its execution start point. Thereby, the object E2 is started-up first (Step S313). By applying inversion processing g(Es1) to the object Es1 that exists in a predetermined part of the object E1 on the main memory 323, the object E2 restores the object Es1 to the object Es on the main memory 323 (Step S314). Thereby, the object E is restored. And, the object E2 transfers control to the object E after completing its own processing. Thereby, the object E starts execution (Step S315). This is equivalent to an operation that the object E obtained from the original source code S is started-up, and is executed. In other words, thereby, as an initial intention, processing defined by the source code S is carried out. The above processing is within a range of a usual operation in a user program, and there is almost no part depending upon the OS.

According to this embodiment, it is possible to conceal one part of a code section and a data section to be especially protected in the program, independent of a structure of hardware and independent of the OS of the information processing apparatus. Also, in the first embodiment, the amount of data to which the conversion processing and inversion processing are applied is the entirety of the object E to which large processing is applied, and is considerably large (typically, about several hundreds kilobytes to several megabytes, and in case that a library or the like is linked, the amount would be larger by its amount). Compared with this, in this second embodiment, the amount is only a part that is a subject to be protected, and is comparatively small (typically, about several hundreds bytes to several kilobytes). Accordingly, a period of processing time during program production is shortened compared with the first embodiment. Also, since generally a period of processing time which is spent for executing inversion processing during execution is proportional to a data size of this subject, compared with the first embodiment, an over-head (an excess period of execution processing time or computer resource necessary for the processing) caused by the realization of a protection function becomes smaller considerably.

### [THIRD EMBODIMENT]

In this embodiment, out of a program that is a subject to be protected, a code section (a part for defining a processing procedure) is not a subject to be concealed, and a self-restoration type program in which mainly a data section (a part for defining values of a constant data group used for processing) is obfuscated is produced, and during its execution, is restored to original contents and is executed. Since generally a data group (a constant table data or the like) in a source code, which a developer wants to conceal, is a progression of a plurality of constant data, in explanation below, a progression will be explained as a subject to be concealed.

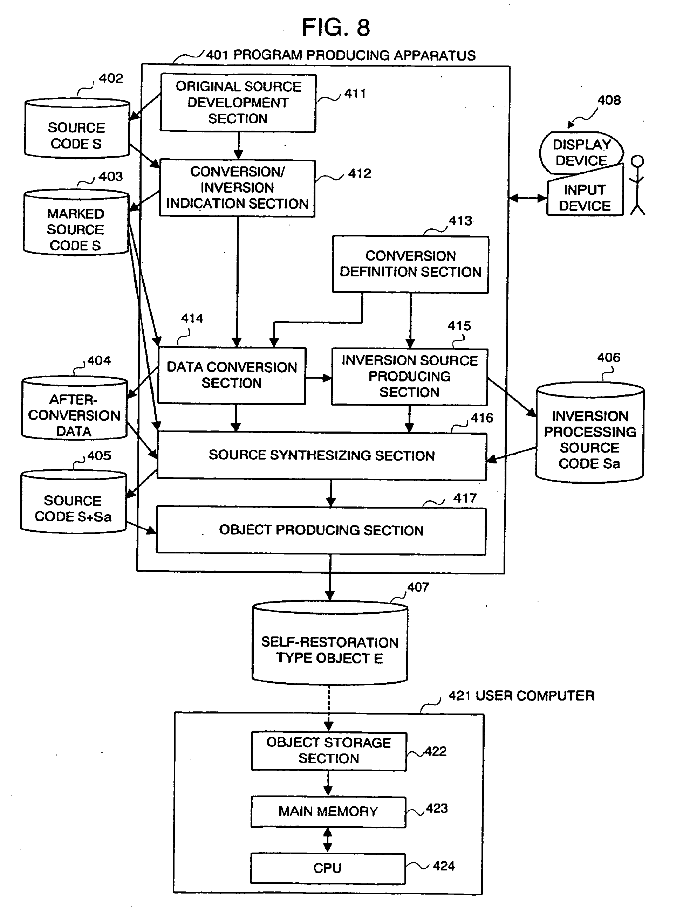

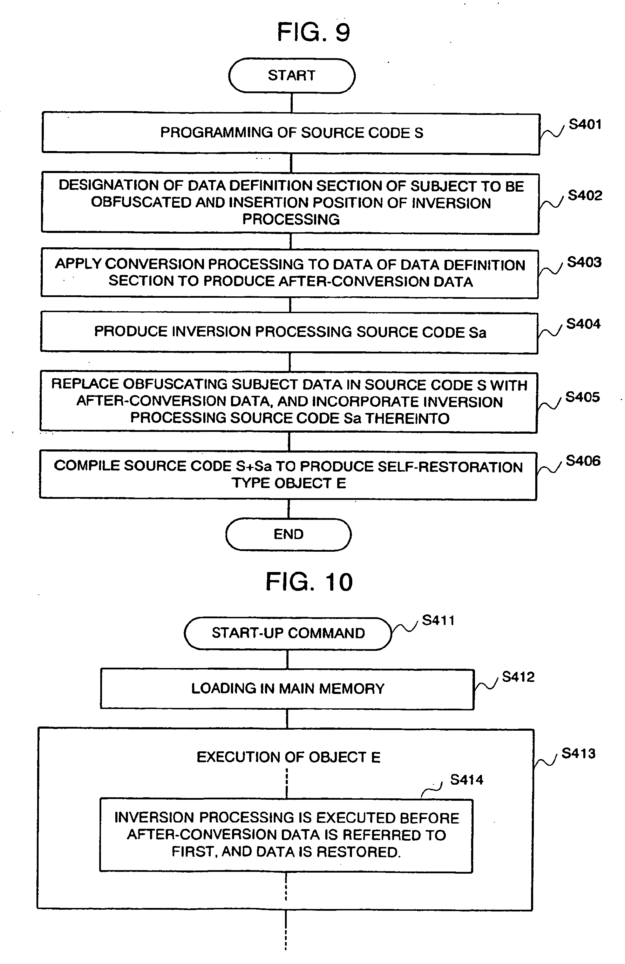

One example of an information processing apparatus, to which this embodiment is applied, is shown in Fig. 8. In Fig. 8, an upper half shows a structure on a software development side, and a lower half shows a structure on a software utilization side. Also, Fig. 9 shows a flow of processing on the software development side, and Fig. 10 shows a flow of processing on the software utilization side.

Referring to Fig. 8, on the software development side, a program producing apparatus 401, and storage sections 402 - 407 such as a magnetic disc device and an input and output device 408 that are connected thereto are provided. The input and output device 408 includes an input device such as a keyboard or the like, from which a developer of software inputs a data and a command to the program producing apparatus 401, and a display device for outputting to the developer a data or the like output from the program producing apparatus 401. Also, the program producing apparatus 401 is provided with an original source development section 411, a conversion/inversion indication section 412, a conversion definition section 413, a data conversion section 414, an inversion source producing section 415, a source synthesizing section 416 and an object producing section 417. Such a program producing apparatus 401 can be realized by a computer such as a workstation and a personal computer, and a program for producing a program. The program for producing a program is recorded in a computer readable record medium such as a magnetic disc and a semiconductor memory which are not shown in the figure, and is read by the computer during start-up or the like of the computer, and by controlling the operation of the computer, each function section constituting the program producing apparatus 401 is produced on the computer.

On the other hand, on the software user side, a user computer 421 having an object storage device 422 such as a magnetic disc and a PROM, which stores a self-restoration type program, a main memory 423 and a CPU 424 is provided. The user computer 421 is a usual personal computer, a mobile information terminal or the like.

Next, referring to Fig. 8 and Fig. 9, an operation on the software development side will be explained. A developer starts-up the original source development section 411 in the program producing apparatus 401 from the input and output device 408, and by using a text editor function included in this original source development section 411, develops a source code S of software, which defines an original desired operation, using high-class language or the like, and stores it in the storage section 402 (Step S401).

Next, the developer starts-up the conversion/inversion indication section 412, and displays the contents of the source code S on the display device, and applies in a data definition section that should be a subject to be concealed a mark indicating that a progression defined there is a subject to be concealed, and also, applies at a position before a part where the progression defined by the data definition section is referred to first a mark indicating that the said position is an inverse processing insertion position of the above-described progression, and stores the source code S marked in this manner in the storage section 403 (Step S402). The mark can be optional if it could be discriminative, and a start mark is inserted just before the progression that is a subject to be concealed and an end mark is inserted just after that. Also, an insertion mark is denoted at the inverse processing insertion position.

Next, the developer starts-up the data conversion section 414. The data conversion section 414 reads the marked source code S from a head in order, and extracts the progression defined by the data definition section from a position where the start mark is inserted to a position just after that, where the end mark is inserted, as one concealment subject part, and applies reversible conversion processing to this extracted progression, and stores a resultant after-conversion data in the storage section 404 (Step S403). Also, when detecting a mark indicating an insertion position of inversion processing corresponding to the progression to which conversion processing is applied, the data conversion section 414 instructs the inversion source producing section 415 to produce a source for applying inversion processing to the after-conversion data of the said progression, and the inversion source producing section 415 produces a source code Sa of the inversion processing in accordance with the instruction, and stores it in the storage section 406 (Step S404).

The above-described reversible conversion processing is f( ) in which, to a progression A1=f(A) that is a result of applying conversion processing f( ) to a certain progression A, inversion processing g( ) where g(A1)=A is established exists. Here, with regard to the conversion processing f( ), a size of an input data is the same as a size of an output data. As an example, a simple method can be used, such as calculation of each array element by means of a fixed calculation formula, calculation between adjacent elements, and an inversion of an order or a stir of an order of the elements within the progression, and such that a calculation result of a secret constant and the first element of the progression A is assigned to the first element of a progression A1 after conversion, and further, a calculation result of that and the second element of the progression A is assigned to the second element of the progression A1 after conversion, Furthermore, since a purpose of this processing is to make the restoration and decipherment of the original progression A impossible, it is more realistic to use a pair of more complicated coding processing and decoding processing in which the supposition and analysis of the contents of conversion are difficult as a pair of the conversion processing and the inversion processing. As an example of coding algorithm, for example, a DES or the like is known, and based on a certain secret key, calculation is conducted by mean of a predetermined calculation method to obtain the progression A1=f(A) from the progression A, and also, to the progression A1, by conducting decoding calculation based on the same secret key, A=g(A1) can be obtained. The obtained progression A1 is a progression having elements and a data type same as the progression A.

In a case of the program producing apparatus 401 of Fig. 8, a pair of the conversion processing f( ) and the inversion processing g( ) having a characteristic as described above are determined by the conversion definition section 413. This is generally conducted by somewhat fixed calculation algorithm and by determining processing parameters that are input thereto and finally have an effect on an operation result. These parameters are values generally called a "code key", and different numerals can be produced at random for every execution or a developer can intentionally input them from input means such as a key board or the like. The data conversion section 414 conducts the conversion of the data based on the progression A extracted from the source code S, and f( ) provided from the conversion definition section 413, and obtains the progression A1=f(A). Also, the inversion source producing section 415 produces a source code Sa of a program for executing inversion processing g(A1) to the progression A1 based on g( ) provided from the conversion definition section 413.

After the processing of the data conversion section 414 and the inversion source producing section 415 is completed, the source synthesizing section 416 is started-up. The source synthesizing section 416 produces a source code S+Sa in which a data section of the source code S is concealed, by replacing the progression A that is a subject to be concealed, which is indicated by the start mark and the end mark in the source code S stored in the storage section 403 with the progression A1 after conversion of the said progression A stored in the storage section 404, and also, by inserting a source code Sa of inversion processing, which is stored in the storage section 406, at a position of the insertion mark indicating a position where inversion processing of the said progression A1 in the source code S is inserted, and stores the source code S+Sa in the storage section 405 (Step S405).

After the processing of the source synthesizing section 416 is completed, the object producing section 417 is started-up. The object producing section 417 produces a self-restoration type object (execution form) E from the source code S+Sa by means of compiling processing using a compiler, and stores it in the storage section 407 (Step S406).

The self-restoration type object E developed in this manner is, in a manner same as the first and second embodiments, stored in the object storage section 422 of the user computer 421.

Next, referring to Fig. 8 and Fig. 10, an operation when the self-restoration type object E stored in the object storage section 422 of the user computer 421 is executed will be explained.

When a start-up command to the self-restoration type object E is generated in the user computer 421 (Step S411), by means of an OS of the said user computer, like a general application program, the self-restoration type object E is loaded in the main memory 423 from the object storage section 422 (Step S412), and control is transferred to its execution start point. Thereby, the self-restoration type object E is executed (Step S413). And, during this execution, before the progression A1 to which data conversion is applied for concealment is referred to first, inversion processing g(A1) is executed to the progression A1, and the original progression A is restored (Step S414). Thereby, as an initial intention, processing defined by the source code S is carried out. The above processing is within a range of a usual operation in a user program, and there is almost no part depending upon the OS.

According to this embodiment, it is possible to conceal a data section to be especially protected in the program, independent of a structure of hardware and independent of the OS of the information processing apparatus. Also, like the second embodiment, there is an advantage that, compared with the first embodiment, an over-head (an excess period of execution processing time or computer resource necessary for the processing) caused by the realization of a protection function can be smaller considerably. Further, there is an advantage that, even at a stage of not only an object level but also a source level, it is possible to make the contents of the processing program concealed (unreadable).

### [FOURTH EMBODIMENT]

In this embodiment also, like the third embodiment, out of a program that is a subject to be protected, a code section is not a subject to be concealed, and a self-restoration type program in which mainly a data section is obfuscated is produced, and during its execution, is restored to original contents and is executed. Since generally a data group (a constant table data or the like) in a source code, which a developer wants to conceal, is a progression of a plurality of data, in explanation below, a progression will be explained as a subject to be concealed.

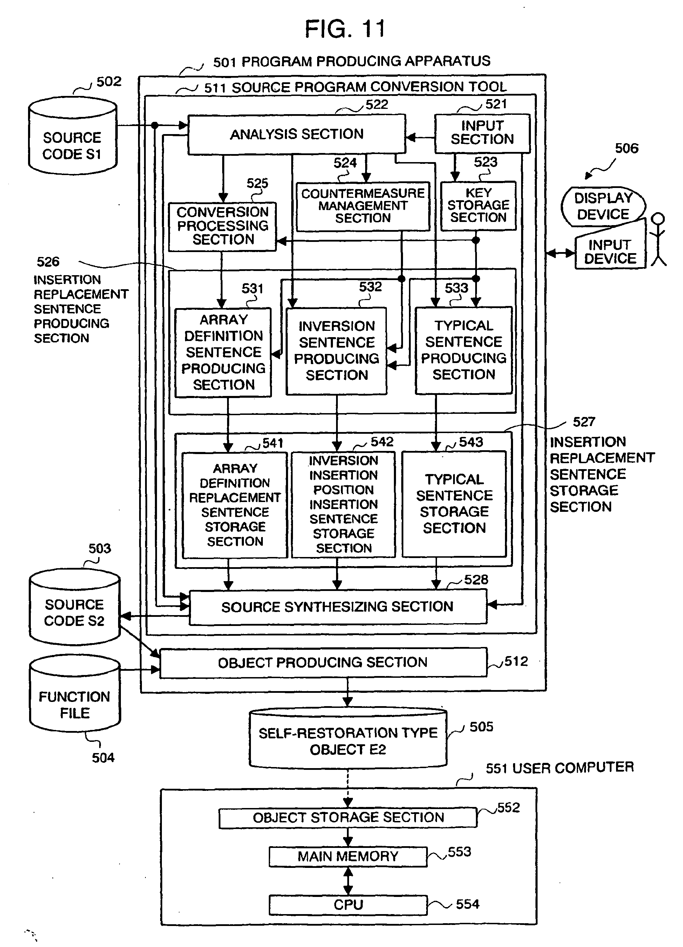

One example of an information processing apparatus, to which this embodiment is applied, is shown in Fig. 11. In Fig. 11, an upper half shows a structure on a software development side, and a lower half shows a structure on a software utilization side.

Referring to Fig. 11, on the software development side, a program producing apparatus 501, and storage sections 502 - 505 such as a magnetic disc device and an input and output device 506 that are connected thereto are provided. The input and output device 506 includes an input device such as a keyboard or the like, from which a developer of software inputs a data and a command to the program producing apparatus 501, and a display device for outputting to the developer a data or the like output from the program producing apparatus 501. Also, the program producing apparatus 501 is provided with a source program conversion tool 511 and an object producing section 512.

The source program conversion tool 511 is a tool for, from a source program including an array that is a subject to be protected, creating a source program which includes the above-described array in a state in which it is concealed, and which has a source for decoding the above-described array in a state in which it is concealed before at least the above-described array is referred to first during execution in an information processing apparatus. This source program conversion tool 511 has an input section 521, an analysis section 522, a key storage section 523, a countermeasure management section 524, a conversion processing section 525, an insertion replacement sentence producing section 526, an insertion replacement sentence storage section 527 and a source synthesizing section 528. Also, the insertion replacement sentence producing section 526 is provided with an array definition sentence producing section 531, an inversion sentence producing section 532 and a typical sentence producing section 533, and the insertion replacement sentence storage section 527 is provided with an array definition replacement sentence storage section 541, an inversion insertion position insertion sentence storage section 542 and a typical sentence storage section 543.

Such a program producing apparatus 501 can be realized by a computer such as a workstation and a personal computer, and a program for producing a program. The program for producing a program is recorded in a computer readable record medium such as a magnetic disc and a semiconductor memory which are not shown in the figure, and is read by the computer during start-up or the like of the computer, and by controlling the operation of the computer, each function section constituting the program producing apparatus 501 is produced on the computer.

On the other hand, on the software user side, a user computer 551 having an object storage section 552 such as a magnetic disc and a PROM, which stores a self-restoration type program, a main memory 553 and a CPU 554 is provided. The user computer 551 is a usual personal computer, a mobile information terminal or the like.

Next, a function and an operation of each section of this embodiment will be explained in detail. First, an operation on the software development side will be explained.

A developer develops a source code S of software, which defines an original desired operation, by means of high-class language. Next, at a position of a definition section of a progression to be concealed in the source code, a predetermined protective subject indication mark indicating that a progression defined at the said position is a subject to be protected is inserted, and also, a source program is created in which, before a position where the progression is referred to first, a predetermined inversion function insertion position mark indicating that the said position is an insertion position of an inversion function is inserted. The number of progressions to be concealed is optional, and in case of concealing a plurality of progressions, the protective subject indication mark and the inversion function insertion position mark are inserted for individual progression. Below, for convenience of explanation, the number of a progression to be concealed is assumed one, and this progression is assumed to be a progression A. The above marking can be conducted using a usual text editor. The marked source code created in this manner is assumed S1. The source code S1 is stored in the storage section 502 as an input file, which can be referred to from the source program conversion tool 511.

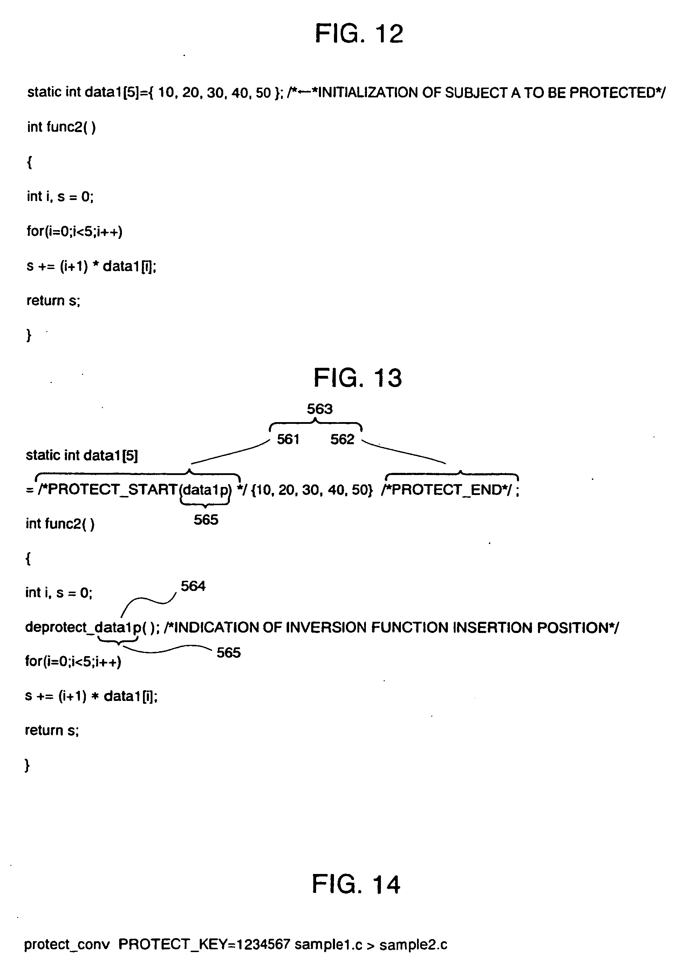

To take high-class language C as an example, one example of the source code S developed by the developer is shown in Fig. 12. Also, one example of the source code S1 in which the developer applied a mark to this source code S is shown in Fig. 13. In the source code S of Fig. 12, a definition section in association with the initialization of an array data1[ ] consisting of five integer elements, and a code section that refers to this array are included. In the example of Fig. 13, a protective subject indication mark 563 is inserted into the definition section of the array data1[ ], and an inversion function insertion position mark 564 is inserted at a position before the array data1[ ] is referred to first. The protective subject indication mark 563 in this example is constructed of a start mark 561 showing a start of a protective subject and an end mark 562 showing an end thereof, and the start mark 561 includes an encode symbol name 565. Since the encode symbol name 565 is used as an array name after conversion, a name which would be unique between files (source codes) to be coded should be used. Also, by using the same encode symbol name 565 for the corresponding inversion function insertion position mark 564, both are related to each other.

By inputting the above marked source code S1 to the source program conversion tool 511, processing that (1) reversible conversion processing is applied to an array A of the definition section of a data to obtain a resultant array A1 and (2) a code for executing an inversion operation is inserted at a position where inversion function insertion is instructed before the array A is used is automatically conducted, and as a result, a converted source code S2 is outputs.

This reversible conversion processing is f( ) in which, to a progression A1=f(A) that is a result of applying conversion processing f( ) to a certain progression A, inversion processing g( ) where g(A1)=A is established exists. Since a purpose of this processing is to make the restoration and decipherment of the original progression A impossible, it is more realistic to use a pair of complicated coding processing and decoding processing in which the supposition and analysis of the contents of conversion are difficult as a pair of the conversion processing and the inversion processing. As an example of coding algorithm, for example, a DES or the like is known, and by using a certain secret key calculation is conducted in order by mean of a predetermined calculation method to obtain the progression A1=f(A, key) from the progression A, and also, to the progression A1, by conducting decoding calculation based on the same secret key, A=g(A1, key) can be obtained. The obtained progression A1 is a progression having the number and a data type same as the progression A.

One example of a command that is input by a developer from the input and output device 506 in case that the marked source code S1 is processed by the source program conversion tool 511 is shown in Fig. 14. In Fig. 14, protect_conv is a name of the source program conversion tool 511, samplel.c is a name of an input file in which the source code S1 is stored, and sample2.c is a name of an output file to which the source code S2 that is a conversion result is output. Also, "PROTECT_KEY=1234567" shows that a key for coding is optionally provided from an outside.

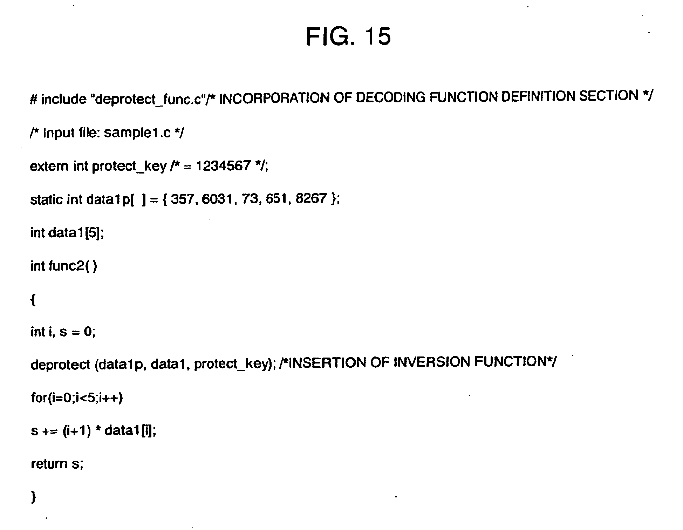

One example of the source code S2 obtained by making the source program conversion tool 511 process the marked source code S1 is shown in Fig. 15. In Fig. 15, an array datalp is obtained by adding reversible conversion f(A, key) to an original array data1, together with a secret coding key protect_key=1234567, and a description in a row of a function deprotect ( ) instructs an operation g(A1, key) that inversion is conducted using the key protect_key=1234567 from the array of datalp, and a result thereof is input to the array of datalp. A code describing the declaration of this inversion function and the processing of a main body is defined within a source file deprotect_func.c prepared in advance, and is read at #include "deprotect_func.c".

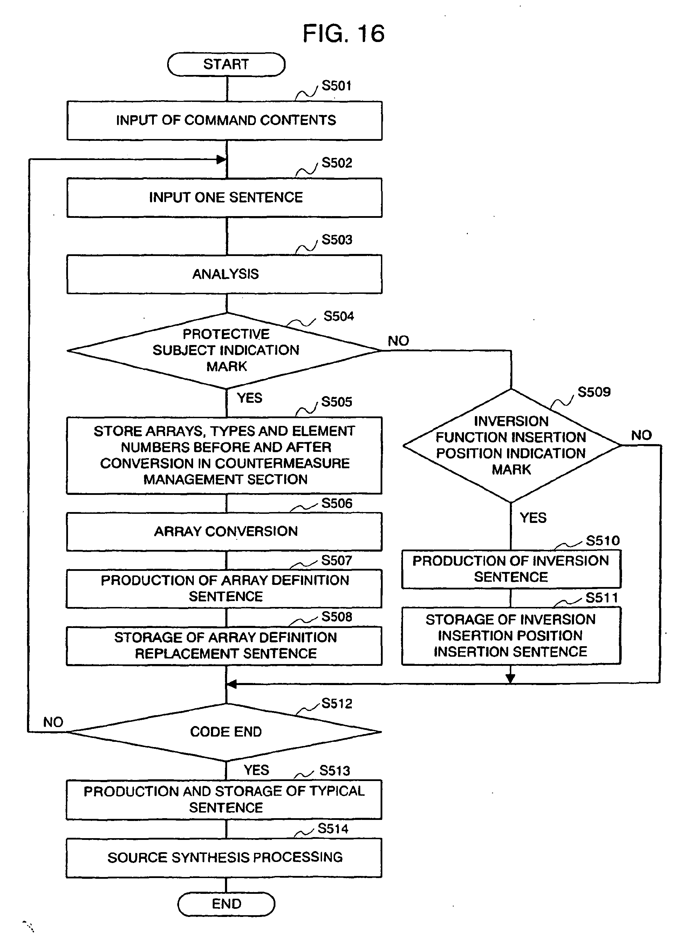

Fig. 16 is a flowchart showing a processing example of the source program conversion tool 511. Below, referring to Fig. 11 and Fig. 13 to Fig. 16, a function and an operation of the source program conversion tool 511 will be explained in detail.

When the source program conversion tool 511 is started-up by means of a command as shown in Fig. 14, the input section 521 takes the contents of the command (Step S501). Out of the contents of the command that was taken, an input file name is transmitted to the analysis section 522 and the source synthesizing section 528, and an output file name is transmitted to the source synthesizing section 528, and a key for coding is transmitted to the key storage section 523, and they are stored, respectively.

The analysis section 522 reads the marked source code S1 as shown in Fig. 13 sentence by sentence in order from a file in the storage section 502, which has the input file name (Step S502), and analyzes the sentences (Step S503). As a result of the analysis, in case that the protective subject indication mark 563 exists in the sentences (YES at Step S504), a set of an array name "data1" before conversion, and an array name "data1p", a type "int" thereof and an element number "5" after conversion are stored in the countermeasure management section 524 (Step S505), and the array name "data1", its type "int" and values "10, 20, 30, 40, 50" of the elements, which were indicated by the protective subject indication mark 563, are delivered to the conversion processing section 525. Using conversion f( ) by means of a preset coding method and the key for coding, which is stored in the key storage section 523, the conversion processing section 525 converts and codes each element of the progression, and outputs a progression after the conversion, in which values of the elements after the conversion are arranged, to the array definition sentence producing section 531, together with the array name "data1" (Step S506). The array definition sentence producing section 531 retrieves the countermeasure management section 524 using the array name "data1" delivered from the conversion processing section 525 to obtain the array name "data1p" and the type "int" after the conversion, and based on them and the array name "data1" and the values of the elements of the array after the conversion, which were delivered from the conversion processing section 525, produces two sentences: a sentence for conducting a definition and initialization of the array "data1p" after the conversion, which is shown on the fourth line in Fig. 15; and a sentence for conducting a definition of the array "data1" before the conversion, which is shown on the fifth line (Step S507), and these two sentences are stored in the array definition replacement sentence storage section 541 on a memory as array definition replacement sentences (Step S508).

In case that the analyzed sentences are sentences which include the inversion function insertion position indication mark 564 (YES at Step S509), the analysis section 522 transmits the array name "data1p" after the conversion, which is included in the mark, to the inversion sentence producing section 532. The inversion sentence producing section 532 retrieves the countermeasure management section 524 using the array name "data1p" to obtain the array name "data1" before the conversion, and also, obtains the key for coding from the key storage section 523, and produces a call sentence of an inversion function that has parameters of the array names and key before and after the conversion, as shown on the ninth line in Fig. 15 (Step S510), and this sentence is stored in the inversion insertion position insertion sentence storage section 542 on a memory as a sentence to be inserted into an inversion insertion position (Step S511).

After the processing by means of the array definition sentence producing section 531 is completed in case that the protective subject indication mark is included in the analyzed sentences, after the processing by means of the inversion sentence producing section 532 is completed in case that the inversion function insertion position indication mark is included in the analyzed sentences, and immediately in case that both marks are not included, the analysis section 522 investigates whether or not remaining sentences exist in the input file (Step S512), and if they remain (NO at Step S512), the same processing is repeated to the next sentence. If the processing is completed to the last sentence (YES at Step S512), it starts-up the typical sentence producing section 533.

The typical sentence producing section 533 produces a sentence on the first line in Fig. 15, which takes a source file deprotect_func.c for defining the declaration of the inversion function and the code of the main body, which were produced by the inversion sentence producing section 532, a sentence on the third line of Fig. 15, which designates the key for coding stored in the key storage section 523, and other typical sentences such as a comment sentence or the like, as shown on the second line, and stores them in the typical sentence storage section 543 (Step S513).

When the processing by means of the typical sentence producing section 533 is completed, the analysis section 522 starts-up the source synthesizing section 528. The source synthesizing section 528 synthesizes the source code S1 and a source stored in each of the storage sections 541 - 543 to produce the source code S2 (Step S514). Particularly, the sentences stored in the typical sentence storage section 543 are output to the output file in the storage section 503, which has the output file name notified from the input section 521, and then, from the input file notified from the input section 521, the marked source code S1 is input from a sentence at its head in order, and if the sentence does not include the protective subject indication mark and the inversion function insertion position indication mark, it is output to the output file as it as, and if the protective subject indication mark is included, instead of the sentence, the sentence stored in the array definition replacement sentence storage section 541 is output, and if the inversion function insertion position indication mark is included, instead of the sentence, the sentence stored in the inversion insertion position insertion sentence storage section 542 is output. Thereby, the source code S2 shown in Fig. 15 is produced on the output file.

For the source code S2 obtained in the above manner, the developer starts-up the object producing section 512. Based on the source code S2 stored in the storage section 503 and the source file deprotect_func.c on the storage section 504, which is designated by a #include sentence of this source code S2, the object producing section 512 produces a self-restoration type object (an execution form) E2 by means of a compiling operation using a compiler. Only a data array corresponding to the above-described deta1p[ ]={357, 6031, 73, 651, 8267} is put in a data section for storing a constant data within the object E2, and without the analysis of a calculation method of the inversion function and the reception of the secret key protect_key for decoding, the original data array data1[5]={10, 20, 30, 40, 50} to be protected cannot be understood, and thereby, the protection of the data array data1 in the program is established.

The self-restoration type object E2 developed in this manner is, in a manner same as the first to third embodiments, stored in the object storage section 552 of the user computer 551.

Next, referring to Fig. 11 and Fig. 10 that was used for the explanation of the third embodiment, an operation when the self-restoration type object E2 stored in the object storage section 552 of the user computer 551 is executed will be explained.

When a start-up command to the self-restoration type object E2 is generated in the user computer 551 (Step S411), by means of an OS of the said user computer, like a general application program, the self-restoration type object E2 is loaded in the main memory 553 from the object storage section 552 (Step S412), and control is transferred to its execution start point. Thereby, the self-restoration type object E2 is executed (Step S413). And, during this execution, before the progression A1 to which data conversion is applied for concealment is referred to first, inversion processing g(A1, key) is executed to the progression A1, and the original progression A is restored (Step S414). Thereby, as an initial intention, processing defined by the source code S is carried out. The above processing is within a range of a usual operation in a user program, and there is almost no part depending upon the OS.

According to this embodiment, it is possible to conceal a data section to be especially protected in the program, independent of a structure of hardware and independent of the OS of the information processing apparatus. Also, like the second embodiment, there is an advantage that, compared with the first embodiment, an over-head (an excess period of execution processing time or computer resource necessary for the processing) caused by the realization of a protection function can be smaller considerably. Further, there is an advantage that, even at a stage of not only an object level but also a source level, it is possible to make the contents of the processing program concealed (unreadable).

In addition, although the key protect_key that is used for the coding processing can be described in the program, as another method, without putting it in the execution form, by providing it from an outside during execution, it is possible to enhance the strength of the protection.

### [FIFTH EMBODIMENT]

Although basically this embodiment is the same as the fourth embodiment, by minimizing a period of time when the array "data1" to be protected and the array "data1p" after conversion thereof exist on the main memory, a risk that it is analyzed is reduced, and more solid protection is conducted.

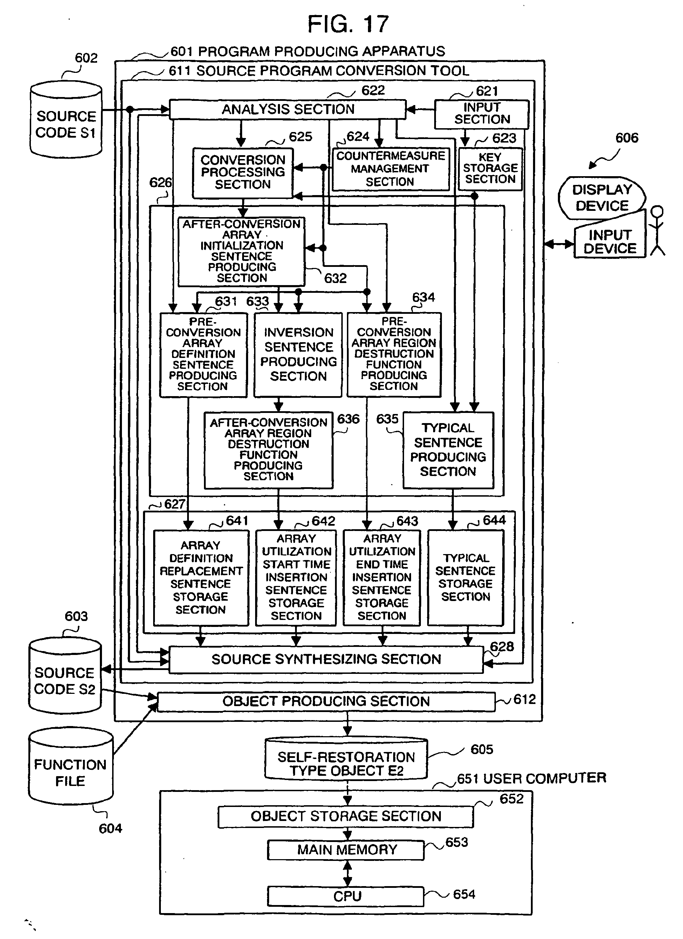

One example of an information processing apparatus, to which this embodiment is applied, is shown in Fig. 17. In Fig. 17, an upper half shows a structure on a software development side, and a lower half shows a structure on a software utilization side.

Referring to Fig. 17, on the software development side, a program producing apparatus 601, and storage sections 602 - 605 such as a magnetic disc device and an input and output device 606 that are connected thereto are provided. The input and output device 606 includes an input device such as a keyboard or the like, from which a developer of software inputs a data and a command to the program producing apparatus 601, and a display device for outputting to the developer a data or the like output from the program producing apparatus 601. Also, the program producing apparatus 601 is provided with a source program conversion tool 611 and an object producing section 612.

The source program conversion tool 611 is a tool for, from a source program including an array that is a subject to be protected, creating a source program which includes the above-described array in a state in which it is concealed, and which has a source for decoding the above-described array in a state in which it is concealed before at least the above-described array is referred to during execution in an information processing apparatus, and for minimizing a period during which the arrays before and after conversion exist on a main memory. This source program conversion tool 611 has an input section 621, an analysis section 622, a key storage section 623, a countermeasure management section 624, a conversion processing section 625, an insertion replacement sentence producing section 626, an insertion replacement sentence storage section 627 and a source synthesizing section 628. Also, the insertion replacement sentence producing section 626 is provided with a pre-conversion array definition sentence producing section 631, an after-conversion array initialization sentence producing section 632, an inversion sentence producing section 633, a pre-conversion array region destruction function producing section 634. a typical sentence producing section 635 and an after-conversion array region destruction function producing section 636, and the insertion replacement sentence storage section 627 is provided with an array definition replacement sentence storage section 641, an array utilization start time insertion sentence storage section 642, an array utilization end time insertion sentence storage section 643 and a typical sentence storage section 644.

Such a program producing apparatus 601 can be realized by a computer such as a workstation and a personal computer, and a program for producing a program. The program for producing a program is recorded in a computer readable record medium such as a magnetic disc and a semiconductor memory which are not shown in the figure, and is read by the computer during start-up or the like of the computer, and by controlling the operation of the computer, each function section constituting the program producing apparatus 601 is produced on the computer.

On the other hand, on the software user side, a user computer 651 having an object storage section 652 such as a magnetic disc and a PROM, which stores a self-restoration type program, a main memory 653 and a CPU 654 is provided. The user computer 651 is a usual personal computer, a mobile information terminal or the like.

Next, a function and an operation of each section of this embodiment will be explained in detail. First, an operation on the software development side will be explained.

A developer develops a source code S of software, which defines an original desired operation, by means of high-class language. Next, at a position of a definition section of a progression to be concealed in the source code S, a predetermined protective subject indication mark indicating that a progression defined at the said position is a subject to be protected is inserted, and also, a source code is created in which, at a position before the progression is referred to, a predetermined subject utilization start position mark indicating that the said position is a utilization start position of the progression is inserted, and at a position after the progression is referred to, a predetermined subject utilization end position mark indicating that the said position is a utilization end position of the progression is inserted. The number of progressions to be concealed is optional, and in case of concealing a plurality of progressions, the protective subject indication mark, the subject utilization start position mark and the subject utilization end position mark are inserted for individual progression. Below, for convenience of explanation, the number of a progression to be concealed is assumed one, and this progression is assumed to be a progression A. The above marking can be conducted using a usual text editor. The marked source code created in this manner is assumed S1. The source code S1 is stored in the storage section 602 as an input file, which can be referred to from the source program conversion tool 611.

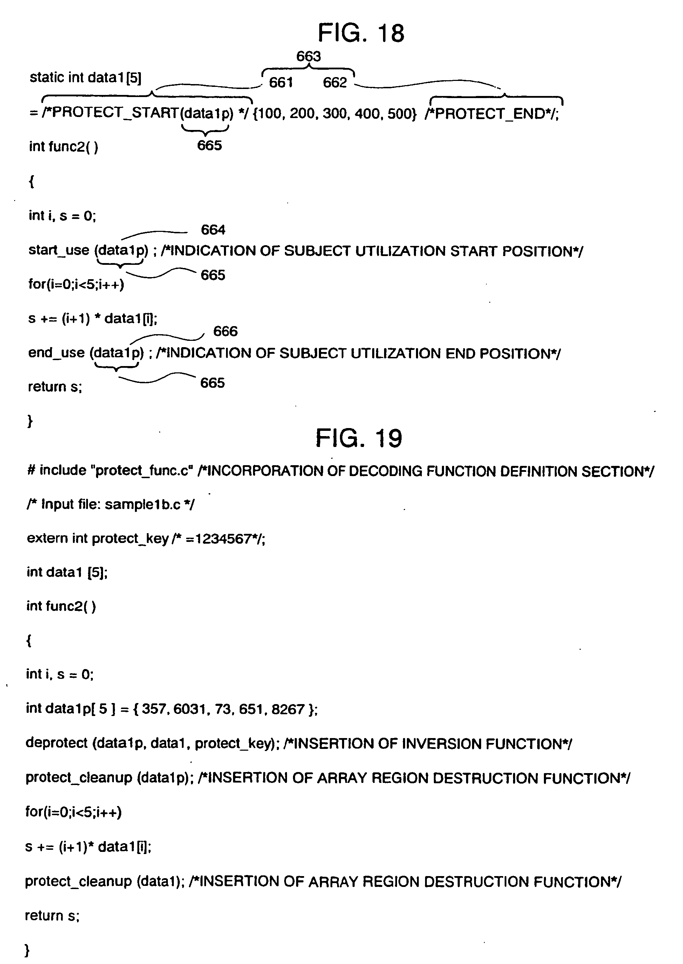

One example of, in case that the source code S developed by the developer using high-class language C is the same as one shown in Fig. 12 like the fourth embodiment, the source code S1 in which the developer applied a mark to this source code S is shown in Fig. 18. In the example of Fig. 18, a protective subject indication mark 663 is inserted into the definition section of an array data1[ ], a subject utilization start mark 664 is inserted at a position before the array data1[ ] is referred to, and a subject utilization end mark 666 is inserted at a position after the array data1[ ] is referred to. The protective subject indication mark 663 in this example is constructed of a start mark 661 showing a start of a protective subject and an end mark 662 showing an end thereof, and the start mark 661 includes an encode symbol name 665. Since the encode symbol name 665 is used as an array name after conversion, a name which would be unique between files (source codes) to be coded should be used. Also, by using the same encode symbol name 665 for the corresponding subject utilization start mark 664 and subject utilization end mark 666, the correspondence therebetween is kept.

By inputting the above marked source code S1 to the source program conversion tool 611, processing that (1) reversible conversion processing is applied to an array A of the definition section of a data to obtain a resultant array A1, (2) a code for executing an inversion operation to restore the array A, and destructing (deleting) a region of an array A1 by zero clear or superscription substitution of a random number and so forth after inversion calculation is inserted at a position before the array A is used, and (3) a code for destructing (deleting) a region of the array A by zero clear or superscription substitution of a random number and so forth is inserted at a position after the array A is used is automatically conducted, and as a result, a converted source code S2 is output. This reversible conversion processing is the same as that in the fourth embodiment.

In case that the marked source code S1 is processed by the source program conversion tool 611, a command shown in Fig. 14 like the fourth embodiment is input by a developer from the input and output device 506. One example of the source code S2 obtained by making the source program conversion tool 611 process the marked source code S1 by means of such a command is shown in Fig. 19. In Fig. 19, an array datalp is obtained by adding reversible conversion f(A, key) to an original array data1, together with a secret coding key protect_key=1234567, and a description in a row of a function deprotect ( ) instructs an operation g(A1, key) that inversion is conducted using the key protect_key=1234567 from the array of datalp, and a result thereof is input to the array of datalp. A code describing the declaration of this inversion function and the processing of a main body is defined within a source file deprotect_func.c prepared in advance, and is read at #include "deprotect_func.c". Up to this point, this is the same as the fourth embodiment. Next, int datalp[5]={357, 6031, 73, 651, 8267} is a sentence that describes the datalp by means of an initializer of an automatic array, which is referred to in C language. Also, a description in a row of a function protect_cleanup(datalp) indicates an operation that, after inversion calculation from the array of data1p, the array of datalp is destructed by means of zero clear or superscription substitution of a random number and so forth, and similarly, a description in a row of a function protect_cleanup(datal) indicates an operation that, after the last utilization of the array of data1, the array of data1 is destructed by means of zero clear or superscription substitution of a random number and so forth. A code describing the declaration of this destruction function and the processing of the main body is defined within the source file deprotect_func.c prepared in advance, and is read at #include "deprotect_func.c".

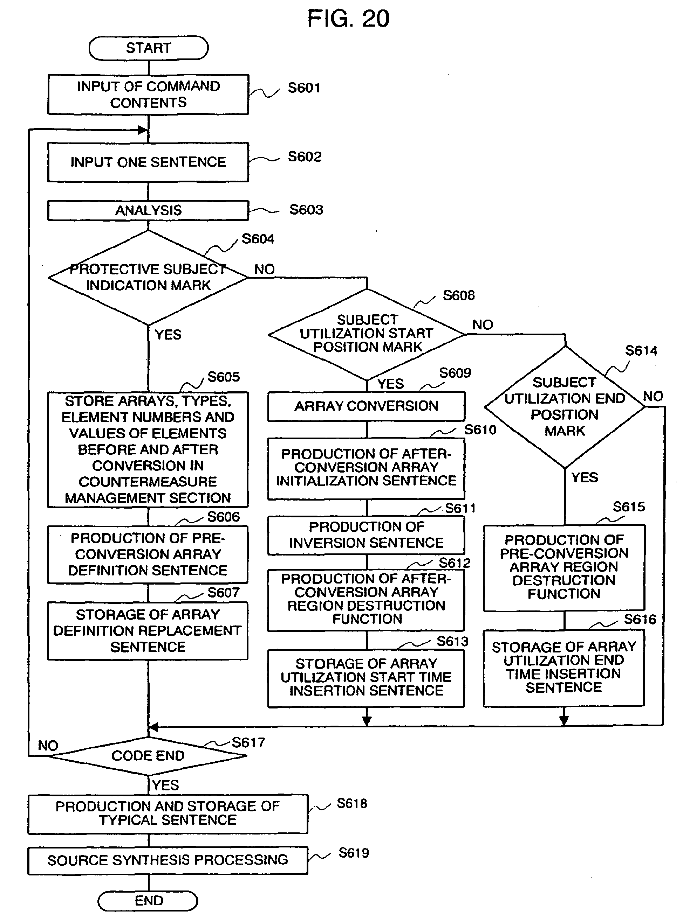

Fig. 20 is a flowchart showing a processing example of the source program conversion tool 611. Below, referring to Fig. 14 and Fig. 17 to Fig. 20, a function and an operation of the source program conversion tool 611 will be explained in detail.

When the source program conversion tool 611 is started-up by means of a command as shown in Fig. 14, the input section 621 takes the contents of the command (Step S601). Out of the contents of the command that was taken, an input file name is transmitted to the analysis section 622 and the source synthesizing section 628, and an output file name is transmitted to the source synthesizing section 628, and a key for coding is transmitted to the key storage section 623, and they are stored, respectively.

The analysis section 622 reads the marked source code S1 as shown in Fig. 18 sentence by sentence in order from a file in the storage section 602, which has the input file name (Step S602), and analyzes the sentences (Step S603). As a result of the analysis, in case that the protective subject indication mark 663 exists in the sentences (YES at Step S604), a set of an array name "data1" before conversion, and an array name "data1p", a type "int" thereof, an element number "5" and a line "10, 20, 30, 40, 50" of values of the elements after conversion are stored in the countermeasure management section 624 (Step S605), and the array name "data1" that was indicated by the protective subject indication mark 663 is delivered to the pre-conversion array definition sentence producing section 631. The pre-conversion array definition sentence producing section 631 retrieves the countermeasure management section 624 using the delivered array name "data1" to obtain a type of an array and information of the element numbers, and produces a definition sentence of the array data1 before the conversion, which is shown on the fourth line in Fig. 19 (Step S606), and this is stored in the array definition replacement sentence storage section 641 on a memory as an array definition replacement sentence (Step S607).

In case that the analyzed sentences are sentences which include the subject utilization start position mark 664 (YES at Step S608), the analysis section 622 delivers the array name "data1p" after the conversion, which is specified the mark, to the conversion processing section 625. The conversion processing section 625 retrieves the countermeasure management section 624 using the array name "data1p" after the conversion to obtain the type "int" of the array, the element number "5" and values "10, 20, 30, 40, 50" of the elements, and using conversion f( ) by means of a preset coding method and the key for coding, which is stored in the key storage section 623, converts and codes each element of the progression, and delivers the progression after the conversion, in which values "357, 6031, 73, 651, 8267" of the elements after the conversion are arranged, to the after-conversion array initialization sentence producing section 632, together with the array name "data1p" (Step S609). The after-conversion array initialization sentence producing section 632 retrieves the countermeasure management section 624 using the array name "data1p" delivered from the conversion processing section 625 to obtain the type "int" of the array and the element number "5", and based on them and the array name "data1p" and the values "357, 6031, 73, 651, 8267" of the elements of the array after the conversion, which were delivered from the conversion processing section 625, produces a sentence for conducting a definition and initialization of the array "data1p" after the conversion, which is shown on the eighth line in Fig. 19, and delivers it to the inversion sentence producing section 633 (Step S610). The inversion sentence producing section 633 retrieves the countermeasure management section 624 using the array name "data1p" in the delivered sentence to obtain the array name "data1" before the conversion, and also, obtains the key for coding from the key storage section 623, and produces a call sentence of an inversion function that has array names before and after the conversion and the key as parameters, as shown on the ninth line of Fig. 19, and delivers it to the after-conversion array region destruction function producing section 636 together with the after-conversion array initialization sentence (Step S611). The after-conversion array region destruction function producing section 636 produces a call sentence of an after-conversion array region destruction function for destructing a region of the array datalp after the conversion, which has the array name after the conversion as a parameter as shown on the tenth line of Fig. 19 (Step S612), and stores the call sentence of this function, and the after-conversion array initialization sentence and the call sentence of the inversion function, which were delivered from the inversion sentence producing section 633 in the array utilization start time insertion sentence storage section 642 as an array utilization start time insertion sentence (Step S613).

In case that the analyzed sentences are sentences which include the subject utilization end position mark 666 (YES at Step S614), the analysis section 622 retrieves the countermeasure management section 624 using the array name "data1p" after the conversion, which is specified by the mark, to obtain the array name "data1" before the conversion, and produces a call sentence of a prior-conversion array region destruction function for destructing a region of the array data1 before the conversion, which has the array name before the conversion as a parameter as shown on the thirteenth line of Fig. 19 (Step S615), and stores the call sentence of this function in the array utilization end time insertion sentence storage section 643 as an array utilization end time insertion sentence (Step S616).

After the processing by means of the pre-conversion array definition sentence producing section 631 is completed in case that the protective subject indication mark is included in the analyzed sentences, after the processing by means of the after-conversion array region destruction function producing section 636 is completed in case that the subject utilization start position mark is included in the analyzed sentences, after the processing by means of the pre-conversion array region destruction function producing section 634 is completed in case that the subject utilization end position mark is included in the analyzed sentences, and immediately in case that none of the marks are included, the analysis section 622 investigates whether or not remaining sentences exist in the input file (Step S617), and if they remain (NO at Step S617), the same processing is repeated to the next sentence. If the processing is completed to the last sentence (YES at Step S617), it starts-up the typical sentence producing section 635.

The typical sentence producing section 635 produces a sentence on the first line in Fig. 19, which takes a source file deprotect_func.c for defining the declaration and the main body of the inversion function and declaration and the main body of the destruction function, a sentence on the third line of Fig. 19, which designates the key for coding stored in the key storage section 623, and other typical sentences such as a comment sentence or the like, as shown on the second line, and stores them in the typical sentence storage section 644 (Step S618).

When the processing by means of the typical sentence producing section 635 is completed, the analysis section 622 starts-up the source synthesizing section 628. The source synthesizing section 628 synthesizes the source code S1 and a source stored in each of the storage sections 641 - 644 to produce the source code S2 (Step S619). Particularly, the sentences stored in the typical sentence storage section 644 are output to the output file in the storage section 603, which has the output file name notified from the input section 621, and then, from the input file notified from the input section 621, the marked source code S1 is input from a sentence at its head in order, and if the sentence does not include the protective subject indication mark and the subject utilization start and end marks, it is output to the output file as it as, and if the protective subject indication mark is included, instead of the sentence, the sentence stored in the array definition replacement sentence storage section 641 is output, and if the subject utilization start position mark is included, instead of the sentence, the sentence stored in the array utilization start time insertion sentence storage section 642 is output, and if the subject utilization end position mark is included, instead of the sentence, the sentence stored in the array utilization end time insertion sentence storage section 643 is output. Thereby, the source code S2 shown in Fig. 19 is produced on the output file.

For the source code S2 obtained in the above manner, the developer starts-up the object producing section 612. Based on the source code S2 stored in the storage section 603 and the source file deprotect_func.c on the storage section 604, which is designated by a #include sentence of this source code S2, the object producing section 612 produces a self-restoration type object (an execution form) E2 by means of a compiling operation using a compiler. In this embodiment, since the array datalp is described by means of an initializer of an automatic array, which is referred to in C language, a data array corresponding this is not put in a data section for storing a constant data, and a code for setting array initialization is produced. Then, compared with the fourth embodiment, the analysis would be more difficult. Also, by means of the execution of deprotect( ), the array datalp is destructed after it is used for setting the array data1, and also, similarly, the array data1 is destructed after it is wholly referred to. Accordingly, a period of time when the array "data1" to be protected or the array data1p" that is the basis of the calculation thereof exists on the memory is also minimized, and a risk that it is analyzed can be reduced, and more solid protection is realized.

The self-restoration type object E2 developed in this manner is, in a manner same as the first to fourth embodiments, stored in the object storage section 652 of the user computer 651.

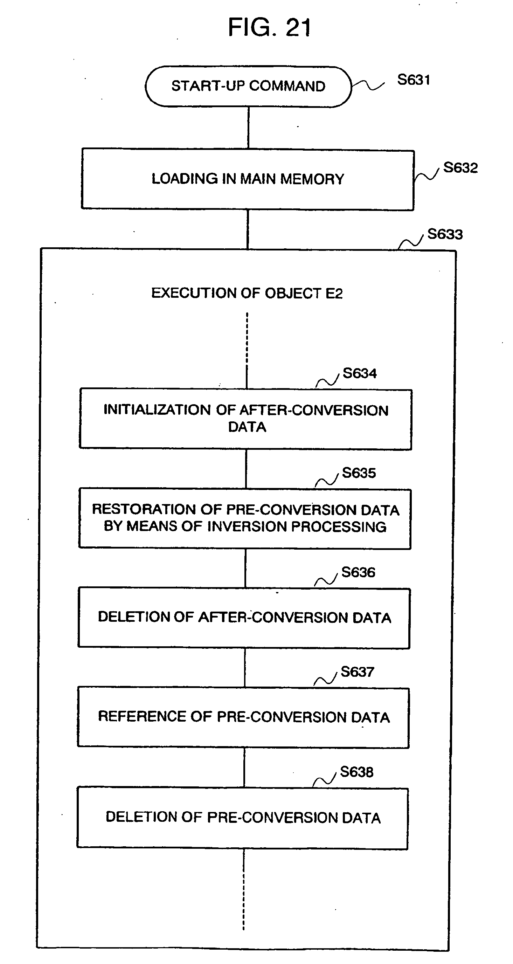

Next, referring to Fig. 17 and Fig. 21 showing a flow of processing on the software user side, an operation when the self-restoration type object E2 stored in the object storage section 652 of the user computer 651 is executed will be explained.

When a start-up command to the self-restoration type object E2 is generated in the user computer 651 (Step S631), by means of an OS of the said user computer 651, like a general application program, the self-restoration type object E2 is loaded in the main memory 653 from the object storage section 652 (Step S632), and control is transferred to its execution start point. Thereby, the self-restoration type object E2 is executed (Step S633). And, during this execution, before a position where the original progression A is referred to, an initial setting of the progression A1 is conducted (Step S634), and then, inversion processing g(A1, key) is executed to the progression A1, and the original progression A is restored (Step S635), and thereafter, the progression A1 that is a source of the calculation is deleted from the main memory 653 by means of the destruction function (Step S636), and after that, the restored array A is referred to (Step S637). And, after the last utilization of the array A, the array A is deleted from the main memory 653 by means of the destruction function (Step S638). Thereby, as an initial intention, processing defined by the source code S is carried out. The above processing is within a range of a usual operation in a user program, and there is almost no part depending upon the OS.

According to this embodiment, it is possible to conceal a data section to be especially protected in the program, independent of a structure of hardware and independent of the OS of the information processing apparatus. Also, like the second embodiment, there is an advantage that, compared with the first embodiment, an over-head (an excess period of execution processing time or computer resource necessary for the processing) caused by the realization of a protection function can be smaller considerably. Further, there is an advantage that, even at a stage of not only an object level but also a source level, it is possible to make the contents of the processing program concealed (unreadable). Furthermore, since a period of time when the array to be protected and the array after conversion thereof exist on the main memory is minimized, a risk that it is analyzed is reduced, and more solid protection can be conducted.

In addition, although the key protect_key that is used for the coding processing can be described in the program, as another method, without putting it in the execution form, by providing it from an outside during execution, it is possible to enhance the strength of the protection.

As explained above, according to the present invention, it is possible to realize the concealment of the contents of a program at a low cost and in a form independent of a platform. The reason thereof is that the concealment of the contents of the program is realized by means of software, and further, the self-restoration type object that does not depend on the OS of the information processing apparatus in which the program is executed is adopted.

## Claims

1. A self-restoration type program (103;104;105) comprising an inversion processing (103a;104a;105a) that is incorporated into a main program (101),
wherein at least a part of the source code of said main program (101) is obfuscated by means of reversible conversion processing from an original progression into a different progression; and said inversion processing (103a;104a;105a) inverts said obfuscated part read onto a main memory (108;223;323;423;553;653) into original progression on said main memory (108;223;323;423;553;653) before said obfuscated part is executed in an information apparatus.

2. The self-restoration type program (103;104;105) recited in claim 1, wherein entirety or one part of said main program (101) is obfuscated, and said inversion processing (103a;104a;104a) operates first during starting of the program.

3. The self-restoration type program recited in claim 1 or 2, wherein an initialization section of an array of constant data that is included in said main program (101) is replaced with an alternative initialization section comprising of an array of alternative constant data that are obfuscated, and an original constant data is restored based on said alternative constant data by said inversion processing (103a;104a;105a) before said constant data is referred to.

4. The self-restoration type program recited in claim 1, 2, or 3, wherein:
an initialization section of an array of constant data that is included in said main program (101) is replaced with an initialization section comprising of an array of alternative constant data that are obfuscated;
initialization setting processing of said alternative constant data, restoration processing of an original constant data from alternative constant data that said initialization setting processing was applied by said inversion processing (103a;104a;105a), and erasing processing of said alternative constant data that said initialization setting processing was applied from the main (108;223;323;423;553;653) is performed before said constant data is referred to; and
erasing processing of said restored constant data from the main memory (108) is performed after said restored constant data is referred to.

5. A program producing method comprising the steps of:
a) obfuscating at least a part of the source code of a main program (101) by means of reversible conversion processing from an original progression into a different progression and
b) incorporating an inversion processing, for inverting said obfuscated part read onto a main memory (108;223;323;423;553;653) into original progression on said main (108;223;323;423;553;653) into a different progression before said obfuscated part is executed in an information processing apparatus, into said main program (101).

6. The program producing method recited in claim 5, wherein said inversion processing operates first during starting of said main program (101).

7. The program producing method according to claim 5 or 6, wherein step a) comprises further the steps of:
replacing an initialization section of a constant data, which is included in a main program (101), with an initialization section comprising of an array of alternative constant data that are obfuscated;
incorporating, into said main program (101), initialization setting processing of said alternative constant data before said constant data is referred to.

8. The method according to anyone of claims 5 to 7, wherein step b) comprises the step of restoration processing of an original constant data by means of said inversion processing to the alternative constant data, to which said initialization setting processing was applied before said constant data is referred to.

9. The method according to anyone of claims 5 to 8, comprising further the step of erasing processing of the alternative constant data, to which said initialization setting processing was applied, from the main memory (108;223;323;423;553;653), before said constant data is referred to, and
erasing processing of erasing said restored constant data from the main memory (108;223;323;423;553;653) after said restored constant data is referred to.

10. The program producing method according to claim 5 or 6, wherein step a) comprises further the steps of:
a first step of compiling a source code of a main program to produce an object;
a second step of converting said object into an obfuscated object by means of reversible conversion processing; and step b) comprises further the step of synthesizing an inversion object for inversion processing said obfuscated object on a main memory (108;223;323;423;553;653) and restoring an original state on said main memory (108;223;323;423;553;653) before execution of said obfuscated object, and said object of said main program (101).

11. The program producing method according to claim 5 or 6, wherein step a) comprises further the steps of:
a first step of compiling a source code of a main program (101) to produce an object;
a second step of obfuscating a part of said object to produce an object having said obfuscated part; and step b) comprises further the step of synthesizing an inversion object for inversion processing said obfuscated part on a main memory (108;223;323;423;553;653) and restoring an original state on said main memory (108;223;323;423;553;653) before execution of said obfuscated part, and said object of said main program (101).

12. A program producing method recited in claim 11, wherein, in said second step, a part put between a start mark and an end mark which are inserted by a user into the source code of the main program (101) is a subject to which conversion processing is applied.

13. The program producing method according to claim 5 or 6, wherein step a) comprises further the steps of :
replacing an initialization section of a constant data, which is included in a source code of said main program, with an initialization section comprising of an array of alternative constant data that are obfuscated by reversible conversion processing;
producing a source code is inserted a source of an inversion processing for restoring said constant data based on said array of alternative constant data; and
compiling said produced source code to produce an object.

14. The program producing method recited in claim 13, wherein a constant data put between a start mark and an end mark which are inserted by a user into the source code of the main program (101) is a subject to which said replacing is applied, and the source of said inversion processing is inserted into a place of an inversion insert position mark which is inserted by a user into the source code of said main program (101).

15. The program producing method according to claim 5 or 6, wherein step a), comprises further the steps of :
replacing an initialization section of a constant data, which is included in a main program (101), with an initialization section comprising of an array of alternative constant data that are obfuscated by reversible conversion processing;
producing a first source for performing a initialization setting processing of said alternative constant data before said constant data is referred to, a restoration processing of an original constant data by means of said inversion processing to the alternative constant data, to which said initialization setting processing was applied before said constant data is referred to, and a erasing processing of the alternative constant data, to which said initialization setting processing was applied, from the main memory (108;223;323;423;553;653), before said constant data is referred to
producing a second source for performing a erasing processing of erasing said restored constant data from the main memory (108;223;323;423;553;653) after said restored constant data is referred to;
producing a source code based on said first source and second source; and
compiling said produced source code and producing an object.

16. The program producing method recited in claim 15, wherein a constant data put between a start mark and an end mark which are inserted by a user into the source code of the main program (101) is a subject to which said reversible conversion processing is applied, said first source is inserted into a place of start position mark which is inserted by a user into the source code of said main program, and said second source is inserted into a place of end position mark which is inserted by a user into the source code of said main program (101).

17. A program producing apparatus (102;201;301;401;501;601) comprising:
means for obfuscating at least a part of the source code of a main program (101) from an original progression into a different progression by means of reversible conversion processing; and
means for incorporating an inversion processing, for inverting said obfuscated part read onto a main memory (108;223;323;423;553;653) into original progression on said main memory (108;223;323;423;553;653) before said obfuscated part is executed in an information processing apparatus, into said main program (101).

18. The program producing apparatus according to claim 17 further comprising:
means for replacing an initialization section of a constant data, which is included in a main program (101), with an initialization section comprising of an array of alternative constant data that are obfuscated;
means for incorporating a initialization setting section for initialization setting said alternative constant data before said constant data is referred to into said main program (101);
means for incorporating a restoration section for restoring an original constant data by inversion processing said alternative constant data initialization set by said initialization setting section before said constant data is referred to into said main program (101);
means for incorporating a erasing section for erasing said initialization set alternative constant data from the main memory (108;223;323;423;553;653) before said constant data is referred to into said main program (101), and
means for incorporating an erasing section for erasing said restored constant data from the main memory (108;223;323;423;553;653) after said restored constant data is referred to.

19. The program producing apparatus according to claim 17 further comprising :
means for compiling a source code of a main program (101) and producing an object;
means for converting said object into an obfuscated object by reversible conversion processing; and
means for synthesizing an inversion object for inversion processing said obfuscated object on a main memory (108;223;323;423;553;653) and restoring an original state on said main memory (108;223;323;423;553;653) before execution of said obfuscated object, and said object of said main program (101).

20. The program producing apparatus according to claim 17 further comprising:
a first means for compiling a source code of a main program (101) and producing an object;
a second means for converting a part of said objects into an obfuscated part by reversible conversion processing; and
a third means for synthesizing an inversion object for inversion processing said obfuscated part on a main memory (108;223;323;423;553;653) and restoring an original state on said main memory (108;223;323;423;553;653) before execution of said obfuscated part, and said object of said main program (101).

21. The program producing apparatus recited in claim 20, wherein said second means converts a part put between a start mark and an end mark which are inserted by a user into the source code of the main program (101).

22. The program producing apparatus according to claim 17 further comprising:
a first means for replacing an initialization section of a constant data, which is included in a source code of said main program (101), with an initialization section comprising of an array of alternative constant data that are obfuscated by reversible conversion processing;
a second means for producing a source code is inserted a source of an inversion processing section for restoring said constant data based on said array of alternative constant data; and
a third means for compiling said produced source code and producing an object.

23. The program producing apparatus recited in claim 22, wherein a constant data put between a start mark and an end mark which are inserted by a user into the source code of the main program (101) is a subject to which said reversible conversion processing is applied, and the source of said inversion processing is inserted into a place of an inversion insert position mark which is inserted by a user into the source code of said main program (101).

24. The program producing apparatus according to claim 17 further comprising:
means for replacing an initialization section of a constant data, which is included in a main program (101), with an initialization section comprising of an array of alternative constant data that are obfuscated by reversible conversion processing;
means for producing a first source for performing a initialization setting processing of said alternative constant data before said constant data is referred to, a restoration processing of an original constant data by means of said inversion processing to the alternative constant data, to which said initialization setting processing was applied before said constant data is referred to, and a erasing processing of the alternative constant data, to which said initialization setting processing was applied, from the main memory (108;223;323;423;553;653), before said constant data is referred to;
producing a second source performing for a erasing processing of erasing said restored constant data from the main memory (108;223;323;423;553;653) after said restored constant data is referred to;
producing a source code based on said first source and second source; and
compiling said produced source code and producing an object.

25. The program producing apparatus recited in claim 24,
wherein a constant data put between a start mark and an end mark which are inserted by a user into the source code of the main program (101) is a subject to which said reversible conversion processing is applied, said first source is inserted into a place of start position mark which is inserted by a user into the source code of said main program (101), and said second source is inserted into a place of end position mark which is inserted by a user into the source code of said main program (101).

26. An information processing apparatus comprising:
an object storage section for storing a self-restoration type program according to anyone of claims 1 to 4, and a main memory (108;223;323;423;553;653) in which said self-restoration type program is loaded; and
a CPU (109;224;324;424;554;654) for executing said self-restoration type program loaded in said main memory (108;223;323;423;553;653).

27. An information processing apparatus recited in claim 26. wherein entirety or one part of said main program (101) is obfuscated and said inversion-processing section operates first during starting of said main program (101).

28. An information processing apparatus recited in claim 27, wherein an initialization section of a constant data that is included in said main program is replaced with an alternative initialization section comprising of an array of alternative constant data that are obfuscated, and said inversion processing section of said self-restoration type program restores an original constant data based on said alternative constant data before said constant data is referred to.

29. An information processing apparatus recited in claim 27,
wherein an initialization section of a constant data that is included in said main program (101) is replaced with an alternative initialization section comprising of an array of alternative constant data that are obfuscated, and
wherein said self-restoration type program comprises:
a process for initialization setting processing said alternative constant data before said constant data is referred to,
a process for restoring an original constant data before said constant data is referred to, by a inversion processing to said alternative constant data that said initialization setting processing was applied,
a process for erasing said alternative constant data from the main memory (108;223;323;423;553;653) before said constant data is referred to and
a process for erasing said restored constant data from said main memory (108;223;323;423;553;653) after said restored constant data is referred to.

## Patentansprüche

1. Selbst wiederherstellendes Programm (103; 104; 105) mit einer Invertierungsverarbeitung (103a; 104a; 105a), die in ein Hauptprogramm (101) aufgenommen ist,
wobei mindestens ein Teil des Quellcodes des Hauptprogramms (101) durch eine reversible Konvertierungsverarbeitung von einer ursprünglichen Reihe in eine andere Reihe unklar gemacht wird und die Invertierungsverarbeitung (103a; 104a; 105a) den in einen Hauptspeicher (108; 223; 323; 423; 553; 653) gelesenen unklar gemachten Teil in die ursprüngliche Reihe in dem Hauptspeicher (108; 223; 323; 423; 553; 653) invertiert, bevor der unklar gemachte Teil in einer Informationsverarbeitungsvorrichtung ausgeführt wird.

2. Selbst wiederherstellendes Programm (103; 104; 105) nach Anspruch 1, wobei das ganze Hauptprogramm (101) oder ein Teil davon unklar gemacht wird und die Invertierungsverarbeitung (103a; 104a; 105a) zuerst während des Starts des Programms ausgeführt wird.

3. Selbst wiederherstellendes Programm nach Anspruch 1 oder 2, wobei ein Initialisierungsabschnitt eines Felds von Konstantdaten, der in dem Hauptprogramm (101) enthalten ist, durch einen alternativen Initialisierungsabschnitt mit einem Feld alternativer Konstantdaten, die unklar gemacht sind, ersetzt wird und Original-Konstantdaten auf der Grundlage der alternativen Konstantdaten durch die Invertierungsverarbeitung (103a; 104a; 105a) wiederhergestellt werden, bevor auf die Konstantdaten Bezug genommen wird.

4. Selbst wiederherstellendes Programm nach Anspruch 1, 2 oder 3, wobei:
ein Initialisierungsabschnitt eines Felds von Konstantdaten, der in dem Hauptprogramm (101) enthalten ist, durch einen Initialisierungsabschnitt ersetzt wird, der ein Feld alternativer Konstantdaten, die unklar gemacht sind, enthält,
eine Initialisierungsfestlegungsverarbeitung der alternativen Konstantdaten, eine Wiederherstellungsverarbeitung der Original-Konstantdaten anhand alternativer Konstantdaten, auf die die Initialisierungsfestlegungsverarbeitung durch die Invertierungsverarbeitung (103a; 104a; 105a) angewendet wurde, und eine Löschverarbeitung der alternativen Konstantdaten, auf die die Initialisierungsfestlegungsverarbeitung von dem Hauptspeicher (108; 223; 323; 423; 553; 653) angewendet wurde, ausgeführt werden, bevor auf die Konstantdaten Bezug genommen wird, und
eine Löschverarbeitung der wiederhergestellten Konstantdaten aus dem Hauptspeicher (108) ausgeführt wird, nachdem auf die wiederhergestellten Konstantdaten Bezug genommen wurde.

5. Programmerzeugungsverfahren mit den folgenden Schritten:
a) Unklarmachen mindestens eines Teils des Quellcodes eines Hauptprogramms (101) durch eine reversible Konvertierungsverarbeitung von einer ursprünglichen Reihe in eine andere Reihe und
b) Aufnehmen einer Invertierungsverarbeitung zum Invertieren des in einen Hauptspeicher (108; 223; 323; 423; 553; 653) gelesenen unklar gemachten Teils in die ursprüngliche Reihe in dem Hauptspeicher (108; 223; 323; 423; 553; 653), bevor der unklar gemachte Teil in einer Informationsverarbeitungsvorrichtung ausgeführt wird, in das Hauptprogramm (101).

6. Programmerzeugungsverfahren nach Anspruch 5, wobei die Invertierungsverarbeitung zuerst während des Starts des Hauptprogramms (101) ausgeführt wird.

7. Programmerzeugungsverfahren nach Anspruch 5 oder 6, wobei Schritt a) weiter die folgenden Schritte aufweist:
Ersetzen eines Initialisierungsabschnitts von Konstantdaten, der in einem Hauptprogramm (101) enthalten ist, durch einen Initialisierungsabschnitt, der ein Feld alternativer Konstantdaten, die unklar gemacht sind, enthält, und
Aufnehmen einer Initialisierungsfestlegungsverarbeitung der alternativen Konstantdaten in das Hauptprogramm (101), bevor auf die Konstantdaten Bezug genommen wird.

8. Verfahren nach einem der Ansprüche 5 bis 7, wobei Schritt b) den folgenden Schritt aufweist:
Wiederherstellen von Original-Konstantdaten durch die Invertierungsverarbeitung an den alternativen Konstantdaten, auf die die Initialisierungsfestlegungsverarbeitung angewendet wurde, bevor auf die Konstantdaten Bezug genommen wird.

9. Verfahren nach einem der Ansprüche 5 bis 8 mit dem weiteren Schritt:
Löschverarbeitung der alternativen Konstantdaten, auf die die Initialisierungsfestlegungsverarbeitung angewendet wurde, aus dem Hauptspeicher (108; 223; 323; 423; 553; 653), bevor auf die Konstantdaten Bezug genommen wird, und
Löschverarbeitung zum Löschen der wiederhergestellten Könstantdaten aus dem Hauptspeicher (108; 223; 323; 423; 553; 653), nachdem auf die wiederhergestellten Konstantdaten Bezug genommen wurde.

10. Programmerzeugungsverfahren nach Anspruch 5 oder 6,
wobei Schritt a) weiter die folgenden Schritte aufweist:
einen ersten Schritt des Kompilierens eines Quellcodes eines Hauptprogramms, um ein Objekt zu erzeugen,
einen zweiten Schritt des Konvertierens des Objekts in ein unklar gemachtes Objekt durch reversible Konvertierungsverarbeitung,
wobei Schritt b) weiter den folgenden Schritt aufweist:
Synthetisieren eines Invertierungsobjekts zur Invertierungsverarbeitung des unklar gemachten Objekts in einem Hauptspeicher (108; 223; 323; 423; 553; 653) und Wiederherstellen eines ursprünglichen Zustands in dem Hauptspeicher (108; 223; 323; 423; 553; 653) vor der Ausführung des unklar gemachten Objekts und des Objekts des Hauptprogramms (101).

11. Programmerzeugungsverfahren nach Anspruch 5 oder 6,
wobei Schritt a) weiter die folgenden Schritte aufweist:
einen ersten Schritt des Kompilierens eines Quellcodes eines Hauptprogramms (101), um ein Objekt zu erzeugen,
einen zweiten Schritt des Unklarmachens eines Teils des Objekts, um ein Objekt mit dem unklar gemachten Teil zu erzeugen,
wobei Schritt b) weiter den folgenden Schritt aufweist:
Synthetisieren eines Invertierungsobjekts zur Invertierungsverarbeitung des unklar gemachten Teils in einem Hauptspeicher (108; 223; 323; 423; 553; 653) und Wiederherstellen eines ursprünglichen Zustands in dem Hauptspeicher (108; 223; 323; 423; 553; 653) vor der Ausführung des unklar gemachten Teils und des Objekts des Hauptprogramms (101).

12. Programmerzeugungsverfahren nach Anspruch 11, wobei in dem zweiten Schritt ein zwischen eine Anfangsmarkierung und eine Endmarkierung, die von einem Benutzer in den Quellcode des Hauptprogramms (101) eingesetzt sind, gesetzter Teil ein Gegenstand ist, worauf die Konvertierungsverarbeitung angewendet wird.

13. Programmerzeugungsverfahren nach Anspruch 5 oder 6, wobei Schritt a) weiter die folgenden Schritte aufweist:
Ersetzen eines Initialisierungsabschnitts von Konstantdaten, der in einem Quellcode des Hauptprogramms enthalten ist, durch einen Initialisierungsabschnitt, der ein Feld alternativer Konstantdaten, die durch reversible Konvertierungsverarbeitung unklar gemacht sind, enthält,
Erzeugen eines Quellcodes, der in eine Quelle einer Invertierungsverarbeitung zum Wiederherstellen der Konstantdaten auf der Grundlage des Felds alternativer Konstantdaten eingefügt wird, und
Kompilieren des erzeugten Quellcodes, um ein Objekt zu erzeugen.

14. Programmerzeugungsverfahren nach Anspruch 13, wobei Konstantdaten, die zwischen eine Anfangsmarkierung und eine Endmarkierung gesetzt sind, die von einem Benutzer in den Quellcode des Hauptprogramms (101) eingefügt sind, ein Gegenstand sind, worauf die Ersetzung bzw. Austauschung angewendet wird, und die Quelle der Invertierungsverarbeitung an einen Ort einer Invertierungseinfügungs-Positionsmarkierung eingesetzt wird, die von einem Benutzer in den Quellcode des Hauptprogramms (101) eingefügt ist.

15. Programmerzeugungsverfahren nach Anspruch 5 oder 6, wobei Schritt a) weiter die folgenden Schritte aufweist:
Ersetzen eines Initialisierungsabschnitts von Konstantdaten, der in einem Hauptprogramm (101) enthalten ist, durch einen Initialisierungsabschnitt, der ein Feld alternativer Konstantdaten, die durch reversible Konvertierungsverarbeitung unklar gemacht sind, enthält,
Erzeugen einer ersten Quelle zum Ausführen einer Initialisierungsfestlegungsverarbeitung der alternativen Konstantdaten, bevor auf die Konstantdaten Bezug genommen wird, einer Wiederherstellungsverarbeitung von Original-Konstantdaten durch die Invertierungsverarbeitung an den alternativen Konstantdaten, worauf die Initialisierungsfestlegungsverarbeitung angewendet wurde, bevor auf die Konstantdaten Bezug genommen wird, und einer Löschverarbeitung der alternativen Konstantdaten, worauf die Initialisierungsfestlegungsverarbeitung angewendet wurde, aus dem Hauptspeicher (108; 223; 323; 423; 553; 653), bevor auf die Konstantdaten Bezug genommen wird,
Erzeugen einer zweiten Quelle zum Ausführen einer Löschverarbeitung zum Löschen der wiederhergestellten Konstantdaten aus dem Hauptspeicher (108; 223; 323; 423; 553; 653), nachdem auf die wiederhergestellten Konstantdaten Bezug genommen wurde,
Erzeugen eines Quellcodes auf der Grundlage der ersten Quelle und der zweiten Quelle und
Kompilieren des erzeugten Quellcodes und Erzeugen eines Objekts.

16. Programmerzeugungsverfahren nach Anspruch 15, wobei Konstantdaten, die zwischen eine Anfangsmarkierung und eine Endmarkierung gesetzt sind, die von einem Benutzer in den Quellcode des Hauptprogramms (101) eingefügt wurden, ein Gegenstand sind, auf den die reversible Konvertierungsverarbeitung angewendet wird, wobei die erste Quelle an einem Ort der Anfangspositionsmarkierung eingefügt wird, die von einem Benutzer in den Quellcode des Hauptprogramms (101) eingefügt wurde, und die zweite Quelle an einem Ort der Endpositionsmarkierung eingefügt wird, die von einem Benutzer in den Quellcode des Hauptprogramms (101) eingefügt wurde.

17. Programmerzeugungsvorrichtung (102; 201; 301; 401; 501; 601), welche aufweist:
Mittel zum Unklarmachen mindestens eines Teils des Quellcodes eines Hauptprogramms (101) von einer ursprünglichen Reihe in eine andere Reihe durch reversible Konvertierungsverarbeitung und
Mittel zum Aufnehmen einer Invertierungsverarbeitung zum Invertieren des in einen Hauptspeicher (108; 223; 323; 423; 553; 653) gelesenen unklar gemachten Teils in die ursprüngliche Reihe in dem Hauptspeicher (108; 223; 323; 423; 553; 653), bevor der unklar gemachte Teil in einer Informationsverarbeitungsvorrichtung ausgeführt wird, in das Hauptprogramm (101).

18. Programmerzeugungsvorrichtung nach Anspruch 17, welche weiter aufweist:
Mittel zum Ersetzen eines Initialisierungsabschnitts von Konstantdaten, der in einem Hauptprogramm (101) enthalten ist, durch einen Initialisierungsabschnitt, der ein Feld alternativer Konstantdaten, die unklar gemacht sind, enthält,
Mittel zum Aufnehmen eines Initialisierungsfestlegungsabschnitts zum Initialisieren der alternativen Konstantdaten, bevor auf die Konstantdaten Bezug genommen wird, in das Hauptprogramm (101),
Mittel zum Aufnehmen eines Wiederherstellungsabschnitts zum Wiederherstellen von Original-Konstantdaten durch Invertierungsverarbeitung der alternativen Konstantdaten deren Initialisierung durch den Initialisierungsfestlegungsabschnitt festgelegt wurde, bevor auf die Konstantdaten Bezug genommen wird, in das Hauptprogramm (101),
Mittel zum Aufnehmen eines Löschabschnitts zum Löschen der alternativen Konstantdaten, deren Initialisierung festgelegt wurde, aus dem Hauptspeicher (108; 223; 323; 423; 553; 653), bevor auf die Konstantdaten Bezug genommen wird, in das Hauptprogramm (101), und
Mittel zum Aufnehmen eines Löschabschnitts zum Löschen der wiederhergestellten Konstantdaten aus dem Hauptspeicher (108; 223; 323; 423; 553; 653), nachdem auf die wiederhergestellten Konstantdaten Bezug genommen wurde.

19. Programmerzeugungsvorrichtung nach Anspruch 17, welche weiter aufweist:
Mittel zum Kompilieren eines Quellcodes eines Hauptprogramms (101) und zum Erzeugen eines Objekts,
Mittel zum Konvertieren des Objekts in ein unklar gemachtes Objekt durch reversible Konvertierungsverarbeitung und
Mittel zum Synthetisieren eines Invertierungsobjekts zur Invertierungsverarbeitung des unklar gemachten Objekts in einem Hauptspeicher (108; 223; 323; 423; 553; 653) und zum Wiederherstellen eines ursprünglichen Zustands in dem Hauptspeicher (108; 223; 323; 423; 553; 653) vor der Ausführung des unklar gemachten Objekts und des Objekts des Hauptprogramms (101).

20. Programmerzeugungsvorrichtung nach Anspruch 17, welche weiter aufweist:
erste Mittel zum Kompilieren eines Quellcodes eines Hauptprogramms (101) und zum Erzeugen eines Objekts,
zweite Mittel zum Konvertieren eines Teils des Objekts in einen unklar gemachten Teil durch reversible Konvertierungsverarbeitung und
dritte Mittel zum Synthetisieren eines Invertierungsobjekts zur Invertierungsverarbeitung des unklar gemachten Teils in einem Hauptspeicher (108; 223; 323; 423; 553; 653) und zum Wiederherstellen eines ursprünglichen Zustands in dem Hauptspeicher (108; 223; 323; 423; 553; 653) vor der Ausführung des unklar gemachten Teils und des Objekts des Hauptprogramms (101).

21. Programmerzeugungsvorrichtung nach Anspruch 20, wobei die zweiten Mittel einen zwischen eine Anfangsmarkierung und eine Endmarkierung, die von einem Benutzer in den Quellcode des Hauptprogramms (101) eingefügt wurden, gesetzten Teil konvertieren.

22. Programmerzeugungsvorrichtung nach Anspruch 17, welche weiter aufweist:
erste Mittel zum Ersetzen eines Initialisierungsabschnitts von Konstantdaten, der in einem Quellcode des Hauptprogramms (101) enthalten ist, durch einen Initialisierungsabschnitt, der ein Feld alternativer Konstantdaten, die durch reversible Konvertierungsverarbeitung unklar gemacht sind, enthält,
zweite Mittel zum Erzeugen eines Quellcodes, der in eine Quelle eines Invertierungsverarbeitungsabschnitts eingefügt ist, zum Wiederherstellen der Konstantdaten auf der Grundlage des Felds alternativer Konstantdaten und
dritte Mittel zum Kompilieren des erzeugten Quellcodes und zum Erzeugen eines Objekts.

23. Programmerzeugungsvorrichtung nach Anspruch 22, wobei Konstantdaten, die zwischen eine Anfangsmarkierung und eine Endmarkierung gesetzt sind, die von einem Benutzer in den Quellcode des Hauptprogramms (101) eingefügt wurden, ein Gegenstand sind, auf den die reversible Konvertierungsverarbeitung angewendet wird, wobei die Quelle der Invertierungsverarbeitung an den Ort einer Invertierungseinfügungs-Positionsmarkierung eingefügt wird, die von einem Benutzer in den Quellcode des Hauptprogramms (101) eingefügt wurde.

24. Programmerzeugungsvorrichtung nach Anspruch 17, welche weiter aufweist:
Mittel zum Ersetzen eines Initialisierungsabschnitts von Konstantdaten, der in einem Hauptprogramm (101) enthalten ist, durch einen Initialisierungsabschnitt, der ein Feld alternativer Konstantdaten, die durch reversible Konvertierungsverarbeitung unklar gemacht sind, enthält,
Mittel zum Erzeugen einer ersten Quelle zum Ausführen einer Initialisierungsfestlegungsverarbeitung der alternativen Konstantdaten, bevor auf die Konstantdaten Bezug genommen wird, einer Wiederherstellungsverarbeitung von Original-Konstantdaten durch die Invertierungsverarbeitung an den alternativen Konstantdaten, worauf die Initialisierungsfestlegungsverarbeitung angewendet wurde, bevor auf die Konstantdaten Bezug genommen wird, und einer Löschverarbeitung der alternativen Konstantdaten, worauf die Initialisierungsfestlegungsverarbeitung angewendet wurde, aus dem Hauptspeicher (108; 223; 323; 423; 553; 653), bevor auf die Konstantdaten Bezug genommen wird,
Erzeugen einer zweiten Quelle zum Ausführen einer Löschverarbeitung zum Löschen der wiederhergestellten Konstantdaten aus dem Hauptspeicher (108; 223; 323; 423; 553; 653), nachdem auf die wiederhergestellten Konstantdaten Bezug genommen wurde,
Erzeugen eines Quellcodes auf der Grundlage der ersten Quelle und der zweiten Quelle und
Kompilieren des erzeugten Quellcodes und Erzeugen eines Objekts.

25. Programmerzeugungsvorrichtung nach Anspruch 24, wobei Konstantdaten, die zwischen eine Anfangsmarkierung und eine Endmarkierung gesetzt sind, die von einem Benutzer in den Quellcode des Hauptprogramms (101) eingefügt wurden, ein Gegenstand sind, auf den die reversible Konvertierungsverarbeitung angewendet wird, wobei die erste Quelle an einem Ort der Anfangspositionsmarkierung eingefügt wird, die von einem Benutzer in den Quellcode des Hauptprogramms (101) eingefügt wurde, und die zweite Quelle an einem Ort der Endpositionsmarkierung eingefügt wird, die von einem Benutzer in den Quellcode des Hauptprogramms (101) eingefügt wurde.

26. Informationsverarbeitungsvorrichtung, welche aufweist:
einen Objektspeicherabschnitt zum Speichern eines selbst wiederherstellenden Programms nach einem der Ansprüche 1 bis 4,
einen Hauptspeicher (108; 223; 323; 423; 553; 653), in den das selbst wiederherstellende Programm geladen wird, und
eine CPU (109; 224; 324; 424; 554; 654) zum Ausführen des in den Hauptspeicher (108; 223; 323; 423; 553; 653) geladenen selbst wiederherstellenden Programms.

27. Informationsverarbeitungsvorrichtung nach Anspruch 26, wobei das ganze Hauptprogramm (101) oder ein Teil davon unklar gemacht ist und der Invertierungsverarbeitungsabschnitt zuerst während des Einleitens des Hauptprogramms (101) arbeitet.

28. Informationsverarbeitungsvorrichtung nach Anspruch 27, wobei ein Initialisierungsabschnitt von Konstantdaten, der in dem Hauptprogramm enthalten ist, durch einen alternativen Initialisierungsabschnitt mit einem Feld alternativer Konstantdaten, die unklar gemacht sind, ersetzt wird und der Invertierungsverarbeitungsabschnitt des selbst wiederherstellenden Programms Original-Konstantdaten auf der Grundlage der alternativen Konstantdaten wiederherstellt, bevor auf die Konstantdaten Bezug genommen wird.

29. Informationsverarbeitungsvorrichtung nach Anspruch 27,
wobei ein Initialisierungsabschnitt von Konstantdaten, der in dem Hauptprogramm (101) enthalten ist, durch einen alternativen Initialisierungsabschnitt ersetzt wird, der ein Feld alternativer Konstantdaten, die unklar gemacht sind, enthält,
wobei das selbst wiederherstellende Programm aufweist:
einen Prozess zur Initialisierungsfestlegungsverarbeitung der alternativen Konstantdaten, bevor auf die Konstantdaten Bezug genommen wird,
einen Prozess zum Wiederherstellen von Original-Konstantdaten, bevor auf die Konstantdaten Bezug genommen wird, durch eine Invertierungsverarbeitung an den alternativen Konstantdaten, auf die die Initialisierungsfestlegungsverarbeitung angewendet wurde,
einen Prozess zum Löschen der alternativen Konstantdaten aus dem Hauptspeicher (108; 223; 323; 423; 553; 653), bevor auf die Konstantdaten Bezug genommen wird, und
einen Prozess zum Löschen der wiederhergestellten Konstantdaten aus dem Hauptspeicher (108; 223; 323; 423; 553; 653), nachdem auf die wiederhergestellten Konstantdaten Bezug genommen wurde.

## Revendications

1. Programme du type à rétablissement automatique (103; 104 ; 105) comprenant un traitement d'inversion (103a; 104a ; 105a) qui est incorporé dans un programme principal (101) ;
dans lequel au moins une partie du code source dudit programme principal (101) est brouillée à l'aide d'un traitement de conversion réversible, d'une progression originale à une progression différente, et ledit traitement d'inversion (103a ; 104a ; 105a) inverse ladite partie brouillée lue sur une mémoire principale (108 ; 223 ; 323 ; 423 ; 553 ; 653) en une progression originale sur ladite mémoire principale (108 ; 223 ; 323 ; 423 ; 553 ; 653) avant que ladite partie brouillée ne soit exécutée dans un dispositif de traitement d'informations.

2. Programme du type à rétablissement automatique (103 ; 104 ; 105) selon la revendication 1, dans lequel la totalité ou une partie dudit programme principal (101) est brouillée, et ledit traitement d'inversion (103a ; 104a ; 105a) est d'abord mis en oeuvre au début du programme.

3. Programme du type à rétablissement automatique selon la revendication 1 ou 2, dans lequel une section d'initialisation d'un ensemble de données constantes, qui sont incluses dans ledit programme principal (101), est remplacée par une section d'initialisation alternative se composant d'un ensemble de données constantes alternatives qui sont brouillées, et une donnée constante originale est rétablie sur la base desdites données constantes alternatives par ledit traitement d'inversion (103a ; 104a ; 105a) avant qu'il ne soit fait référence à auxdites données constantes.

4. Programme du type à rétablissement automatique selon la revendication 1, 2 ou 3, dans lequel :
une section d'initialisation d'un ensemble de données constantes, qui sont incluses dans ledit programme principal (101) est remplacée, par une section d'initialisation se composant d'un ensemble de données constantes alternatives qui sont brouillées;
un traitement d'établissement d'initialisation desdites données constantes alternatives, un traitement de rétablissement d'une donnée constante originale à partir des données constantes alternatives sur lesquelles a été appliqué ledit traitement d'établissement d'initialisation par ledit traitement d'inversion (103a ; 104a ; 105a), et un traitement d'effacement desdites données constantes alternatives sur lesquelles a été appliqué ledit traitement d'établissement d'initialisation à partir de ladite mémoire principale (108 ; 223 ; 323 ; 423 ; 553 ; 653) sont accomplis avant qu'il ne soit fait référence auxdites données constantes ; et
un traitement d'effacement de ladite donnée constante rétablie à partir de ladite mémoire principale (108) est accompli après qu'il ne soit fait référence à ladite donnée constante rétablie.

5. Procédé de production de programme, comprenant les étapes consistant :
a) à brouiller au moins une partie du code source d'un programme principal (101) à l'aide d'un traitement de conversion réversible, d'une progression originale à une progression différente, et
b) à incorporer un traitement d'inversion pour inverser ladite partie brouillée lue sur une mémoire principale (108 ; 223 ; 323 ; 423 ; 553 ; 653) en une progression originale sur ladite mémoire principale (108 ; 223 ; 323 ; 423 ; 553 ; 653) avant que ladite partie brouillée ne soit exécutée dans un dispositif de traitement d'informations, dans ledit programme principal (101).

6. Procédé de production de programme selon la revendication 5, dans lequel ledit traitement d'inversion est d'abord mis en oeuvre au début dudit programme principal (101).

7. Procédé de production de programme selon la revendication 5 ou 6, dans lequel l'étape a) comprend, en outre, les étapes consistant :
à remplacer une section d'initialisation d'une donnée constante qui est incluse dans un programme principal (101) par une section d'initialisation se composant d'un ensemble de données constantes alternatives qui sont brouillées ;
à incorporer, dans ledit programme principal (101), un traitement d'établissement d'initialisation desdites données constantes alternatives avant qu'il ne soit fait référence à ladite donnée constante.

8. Procédé selon l'une quelconque des revendications 5 à 7, dans lequel l'étape b) comprend l'étape de traitement de rétablissement d'une donnée constante originale à l'aide dudit traitement d'inversion en données constantes alternatives sur lesquelles a été appliqué ledit traitement d'établissement d'initialisation avant qu'il ne soit fait référence à ladite donnée constante.

9. Procédé selon l'une quelconque des revendications 5 à 8, comprenant, en outre, l'étape de traitement d'effacement des données constantes alternatives sur lesquelles a été appliqué ledit traitement d'établissement d'initialisation à partir de la mémoire principale (108 ; 223 ; 323 ; 423 ; 553 ; 653) avant qu'il ne soit fait référence à ladite donnée constante, et l'étape de traitement d'effacement pour effacer ladite donnée constante rétablie à partir de la mémoire principale (108 ; 223 ; 323 ; 423 ; 553 ; 653) après qu'il a été fait référence à ladite donnée constante rétablie.

10. Procédé de production de programme selon la revendication 5 ou 6, dans lequel l'étape a) comprend, en outre, les étapes qui consistent en :
une première étape de compilation d'un code source d'un programme principal pour produire un objet ;
une seconde étape de conversion dudit objet en un objet brouillé à l'aide d'un traitement de conversion réversible ; et l'étape b) comprend, en outre
l'étape de synthèse d'un objet d'inversion pour le traitement d'inversion dudit objet brouillé sur une mémoire principale (108 ; 223 ; 323 ; 423 ; 553 ; 653) et le rétablissement d'un état original sur ladite mémoire principale (108 ; 223 ; 323 ; 423 ; 553 ; 653) avant l'exécution dudit objet brouillé, et ledit objet dudit programme principal (101).

11. Procédé de production de programme selon la revendication 5 ou 6, dans lequel l'étape a) comprend, en outre, les étapes qui consistent en :
une première étape de compilation d'un code source d'un programme principal (101) pour produire un objet ;
une seconde étape de brouillage d'une partie dudit objet pour produire un objet ayant ladite partie brouillée ; et l'étape b) comprend, en outre
l'étape de synthèse d'un objet d'inversion pour le traitement d'inversion de ladite partie brouillée sur une mémoire principale (108 ; 223 ; 323 ; 423 ; 553 ; 653) et le rétablissement d'un état original sur ladite mémoire principale (108 ; 223 ; 323 ; 423 ; 553 ; 653) avant l'exécution de ladite partie brouillée, et ledit objet dudit programme principal (101).

12. Procédé de production de programme selon la revendication 11, dans lequel, dans ladite seconde étape, une partie placée entre une marque de début et une marque de fin qui sont insérées par un utilisateur dans le code source du programme principal (101) est un objet auquel le traitement de conversion est appliqué.

13. Procédé de production de programme selon la revendication 5 ou 6, dans lequel l'étape a) comprend, en outre, les étapes qui consistent en :
un remplacement d'une section d'initialisation d'une donnée constante, qui est incluse dans un code source dudit programme principal, par une section d'initialisation se composant d'un ensemble de données constantes alternatives qui sont brouillées par le traitement de conversion réversible ;
une production d'un code source dans lequel est insérée une source d'un traitement d'inversion pour rétablir ladite donnée constante sur la base dudit ensemble de données constantes alternatives ; et
une compilation dudit code source produit pour produire un objet.

14. Procédé de production de programme selon la revendication 13, dans lequel une donnée constante placée entre une marque de début et une marque de fin qui sont insérées par un utilisateur dans le code source du programme principal (101) est un objet auquel ledit remplacement est appliqué, et la source dudit traitement d'inversion est insérée en un emplacement d'une marque de position d'insertion d'inversion qui est insérée par un utilisateur dans le code source dudit programme principal (101).

15. Procédé de production de programme selon la revendication 5 ou 6, dans lequel l'étape a) comprend, en outre, les étapes qui consistent en :
un remplacement d'une section d'initialisation d'une donnée constante, qui est incluse dans un programme principal (101), par une section d'initialisation se composant d'un ensemble de données constantes alternatives qui sont brouillées par le traitement de conversion réversible ;
une production d'une première source pour accomplir un traitement d'établissement d'initialisation desdites données constantes alternatives avant qu'il ne soit fait référence à ladite donnée constante, un traitement de rétablissement d'une donnée constante originale à l'aide dudit traitement d'inversion en données constantes alternatives sur lesquelles a été appliqué ledit traitement d'établissement d'initialisation avant qu'il ne soit fait référence à ladite donnée constante, et un traitement d'effacement des données constantes alternatives sur lesquelles a été appliqué ledit traitement d'établissement d'initialisation, à partir de la mémoire principale (108 ; 223 ; 323 ; 423 ; 553 ; 653) avant qu'il ne soit fait référence à ladite donnée constante ;
une production d'une seconde source pour accomplir un traitement d'effacement pour effacer ladite donnée constante rétablie à partir de la mémoire principale (108 ; 223 ; 323 ; 423 ; 553 ; 653) après qu'il a été fait référence à ladite donnée constante rétablie ;
une production d'un code source sur la base desdites première source et seconde source ; et
une compilation dudit code source produit et une production d'un objet.

16. Procédé de production de programme selon la revendication 15, dans lequel une donnée constante placée entre une marque de début et une marque de fin qui sont insérées par un utilisateur dans le code source du programme principal (101) est un objet auquel ledit traitement de conversion réversible est appliqué, ladite première source est insérée en un emplacement d'une marque de position de début qui est insérée par un utilisateur dans le code s.ource dudit programme principal (101), et ladite seconde source est insérée en un emplacement d'une marque de position de fin qui est insérée par un utilisateur dans le code source dudit programme principal (101).

17. Dispositif de production de programme (102 ; 201 ; 301 ; 401 ; 501 ; 601) comprenant :
des moyens pour brouiller au moins une partie du code source d'un programme principal (101) d'une progression originale à une progression différente à l'aide d'un traitement de conversion réversible ; et
des moyens pour incorporer un traitement d'inversion pour inverser ladite partie brouillée lue sur une mémoire principale (108 ; 223 ; 323 ; 423 ; 553 ; 653) en une progression originale sur ladite mémoire principale (108 ; 223 ; 323 ; 423 ; 553 ; 653) avant que ladite partie brouillée ne soit exécutée dans un dispositif de traitement d'informations, dans ledit programme principal (101).

18. Dispositif de production de programme selon la revendication 17, comprenant, en outre :
des moyens pour remplacer une section d'initialisation d'une donnée constante, qui est incluse dans un programme principal (101), par une section d'initialisation se composant d'un ensemble de données constantes alternatives qui sont brouillées ;
des moyens pour incorporer une section d'établissement d'initialisation pour l'établissement d'initialisation desdites données constantes alternatives avant qu'il ne soit fait référence à ladite donnée constante dans ledit programme principal (101) ;
des moyens pour incorporer une section de rétablissement pour rétablir une donnée constante originale par traitement d'inversion desdites données constantes alternatives dont l'initialisation a été établie par ladite section d'établissement d'initialisation avant qu'il ne soit fait référence à ladite donnée constante dans ledit programme principal (101) ;
des moyens pour incorporer une section d'effacement pour effacer lesdites données constantes alternatives dont l'initialisation a été établie à partir de la mémoire principale (108 ; 223 ; 323 ; 423 ; 553 ; 653) avant qu'il ne soit fait référence à ladite donnée constante dans ledit programme principal (101) ; et
des moyens pour incorporer une section d'effacement pour effacer ladite donnée constante rétablie à partir de la mémoire principale (108 ; 223 ; 323 ; 423 ; 553 ; 653) après qu'il a été fait référence à ladite donnée constante rétablie.

19. Dispositif de production de programme selon la revendication 17, comprenant, en outre :
des moyens pour compiler un code source d'un programme principal (101) et pour produire un objet ;
des moyens pour convertir ledit objet en un objet brouillé à l'aide d'un traitement de conversion réversible ; et
des moyens pour synthétiser un objet d'inversion pour le traitement d'inversion dudit objet brouillé sur une mémoire principale (108 ; 223 ; 323 ; 423 ; 553 ; 653) et pour rétablir un état original sur ladite mémoire principale (108 ; 223 ; 323 ; 423 ; 553 ; 653) avant l'exécution dudit objet brouillé, et ledit objet dudit programme principal (101).

20. Dispositif de production de programme selon la revendication 17, comprenant, en outre :
un premier moyen pour compiler un code source d'un programme principal (101) et pour produire un objet ;
un second moyen pour convertir une partie dudit objet en une partie brouillée à l'aide d'un traitement de conversion réversible ; et
un troisième moyen pour synthétiser un objet d'inversion pour le traitement d'inversion de ladite partie brouillée sur une mémoire principale (108 ; 223; 323 ; 423 ; 553 ; 653) et pour rétablir un état original sur ladite mémoire principale (108 ; 223 ; 323; 423 ; 553 ; 653) avant l'exécution de ladite partie brouillée, et ledit objet dudit programme principal (101).

21. Dispositif de production de programme selon la revendication 20, dans lequel ledit second moyen convertit une partie placée entre une marque de début et une marque de fin qui sont insérées par un utilisateur dans le code source du programme principal (101).

22. Dispositif de production de programme selon la revendication 17, comprenant, en outre :
un premier moyen pour remplacer une section d'initialisation d'une donnée constante, qui est incluse dans un code source dudit programme principal (101), par une section d'initialisation se composant d'un ensemble de données constantes alternatives qui sont brouillées par le traitement de conversion réversible ;
un second moyen pour produire un code source qui est insérée dans une source d'une section de traitement d'inversion pour rétablir ladite donnée constante sur la base dudit ensemble de données constantes alternatives ; et
un troisième moyen pour compiler ledit code source produit et pour produire un objet.

23. Dispositif de production de programme selon la revendication 22, dans lequel une donnée constante placée entre une marque de début et une marque de fin qui sont insérées par un utilisateur dans le code source du programme principal (101) est un sujet auquel ledit traitement de conversion réversible est appliqué, et la source dudit traitement d'inversion est insérée en un emplacement d'une marque de position d'insertion d'inversion qui est insérée par un utilisateur dans le code source dudit programme principal (101).

24. Dispositif de production de programme selon la revendication 17, comprenant, en outre :
des moyens pour remplacer une section d'initialisation d'une donnée constante, qui est incluse dans un programme principal (101), par une section d'initialisation se composant d'un ensemble de données constantes alternatives qui sont brouillées par le traitement de conversion réversible ;
des moyens pour produire une première source pour accomplir un traitement d'établissement d'initialisation desdites données constantes alternatives avant qu'il ne soit fait référence à ladite donnée constante, un traitement de rétablissement d'une donnée constante originale à l'aide dudit traitement d'inversion en données constantes alternatives sur lesquelles a été appliqué ledit traitement d'établissement d'initialisation avant qu'il ne soit fait référence à ladite donnée constante, et un traitement d'effacement des données constantes alternatives sur lesquelles a été appliqué ledit traitement d'établissement d'initialisation, à partir de la mémoire principale (108 ; 223 ; 323 ; 423 ; 553 ; 653) avant qu'il ne soit fait référence à ladite donnée constante ;
produire une seconde source pour accomplir un traitement d'effacement pour effacer ladite donnée constante rétablie à partir de la mémoire principale (108 ; 223 ; 323 ; 423 ; 553 ; 653) après qu'il a été fait référence à ladite donnée constante rétablie ;
produire un code source sur la base desdites première source et seconde source ; et
compiler ledit code source produit et produire un objet.

25. Dispositif de production de programme selon la revendication 24, dans lequel une donnée constante placée entre une marque de début et une marque de fin qui sont insérées par un utilisateur dans le code source du programme principal (101) est un sujet auquel ledit traitement de conversion réversible est appliqué, ladite première source est insérée en un emplacement d'une marque de position de début qui est insérée par un utilisateur dans le code source dudit programme principal (101), et ladite seconde source est insérée en un emplacement d'une marque de position de fin qui est insérée par un utilisateur dans le code source dudit programme principal (101).

26. Dispositif de traitement d'informations, comprenant:
une section de mémorisation d'objet pour mémoriser un programme du type à rétablissement automatique selon l'une quelconque des revendications 1 à 4, et une mémoire principale (108 ; 223 ; 323 ; 423 ; 553 ; 653) dans laquelle est chargé ledit programme du type à rétablissement automatique ; et
une CPU (unité centrale de traitement) (109 ; 224 ; 324 ; 424 ; 554 ; 654) pour exécuter ledit programme du type à rétablissement automatique chargé dans ladite mémoire principale (108 ; 223 ; 323 ; 423 ; 553 ; 653).

27. Dispositif de traitement d'informations selon la revendication 26, dans lequel la totalité ou une partie dudit programme principal (101) est brouillée, et ladite section de traitement d'inversion est d'abord mise en oeuvre au début dudit programme principal (101).

28. Dispositif de traitement d'informations selon la revendication 27, dans lequel une section d'initialisation d'une donnée constante, qui est incluse dans ledit programme principal, est remplacée par une section d'initialisation alternative
comprenant un ensemble de données constantes alternatives qui sont brouillées, et ladite section de traitement d'inversion dudit programme du type à rétablissement automatique rétablit une donnée constante originale sur la base desdites données constantes alternatives avant qu'il ne soit fait référence à ladite donnée constante.

29. Dispositif de traitement d'informations selon la revendication 27,
dans lequel une section d'initialisation d'une donnée constante, qui est incluse dans ledit programme principal (101), est remplacée par une section d'initialisation alternative comprenant un ensemble de données constantes alternatives qui sont brouillées, et
dans lequel ledit programme du type à rétablissement automatique comprend :
un processus pour le traitement d'établissement d'initialisation desdites données constantes alternatives avant qu'il ne soit fait référence à ladite donnée constante,
un processus pour le rétablissement d'une donnée constante originale avant qu'il ne soit fait référence à ladite donnée constante, par un traitement d'inversion desdites données constantes alternatives sur lesquelles a été appliqué ledit traitement d'établissement d'initialisation,
un processus pour l'effacement desdites données constantes alternatives à partir de la mémoire principale (108 ; 223 ; 323 ; 423 ; 553 ; 653) avant qu'il ne soit fait référence à ladite donnée constante, et
un processus pour l'effacement de ladite donnée constante rétablie à partir de ladite mémoire principale (108 ; 223 ; 323 ; 423 ; 553 ; 653) après qu'il ne soit fait référence à ladite donnée constante rétablie.
